# EUROPEAN PATENT SPECIFICATION

(11) **EP 4 433 858 B1**
(45) Date of publication and mention of the grant of the patent: **26.08.2026**
(21) Application number: 22812752.8
(22) Date of filing: 18.11.2022
(51) Int. Cl.: G02B 26/08, G02B 26/10, H02J 7/35, H02J 50/30, H04N 9/31

(54) **MIRROR SYSTEM**
SPIEGELSYSTEM
SYSTÈME DE MIROIR

(30) Priority: 19.11.2021 GB 202116747; 10.02.2022 GB 202201752
(43) Date of publication of application: 25.09.2024
(73) Proprietor: SINTEF TTO AS, 7465 Trondheim (NO)
(72) Inventor: SKOKIC, Zeljko, 0368 Oslo (NO); GJESSING, Jo, 1178 Oslo (NO); DAHL, Tobias, 0880 Oslo (NO); THORSTENSEN, Jostein, 0493 Oslo (NO)
(74) Representative: Dehns
(86) International application number: PCT/GB2022/052938
(87) International publication number: WO 2023/089333

(56) References cited:
- EP-A1- 1 480 069
- CN-B- 102 981 269
- DE-A1- 102010 026 571
- US-A1- 2018 052 325
- NAONO TAKAYUKI ET AL: "Non-resonant 2-D piezoelectric MEMS optical scanner actuated by Nb doped PZT thin film", SENSORS AND ACTUATORS A: PHYSICAL, vol. 233, 1 September 2015 (2015-09-01), NL, pages 147 - 157, XP055917257, ISSN: 0924-4247, DOI: 10.1016/j.sna.2015.06.029

## Description

This invention relates to systems for deflecting a laser beam into a zone.

It is known to direct light from a light source to a target using mirrors. At the small scale, for example in optical systems where laser beams are steered by mirrors, microelectromechanical systems (MEMS) scanning micro mirrors are typically used. Such devices have a range of applications, one example is in projection, e.g. digital micromirror devices (DMDs) use arrays of MEMS mirrors to project images.

Existing MEMS scanning micro mirrors operate by actuating attachments surrounding a central mirror. Typically, the actuators receive an AC current and oscillate either on one or two axes. These existing micro mirrors are not able to achieve large deflection angles and typically only achieve projection within a small field of view.

There also typically exists a trade-off between the speed of movement of these mirrors and their range of motion (e.g. deflection angle). Therefore, visible images projected from existing systems are often either very small or suffer from a lowresolution.

DE 10 2010 026571 A1 describes an optical scanning device with two scanning mirrors and with optical elements for imaging the two scanning mirrors one onto the other by means of an intermediate image.

US 2018/052325 A1 describes an optical system comprising an illumination source configured to emit light, a first scanning stage configured to receive the light and to scan the light, and a second scanning stage configured to receive and direct the light from the first scanning stage toward a projected exit pupil.

CN 102 981 269 B describes a large-visual field scanning and imaging device based on a solar adaptive system.

When viewed from a first aspect, the invention provides a system for deflecting a laser beam into a zone as recited in the claims 1 and 3..

Thus it will be seen that, in accordance with the invention, by combining the faster actuating device and the slower actuating device into a system for deflecting a laser beam into a zone, the laser can be projected at a location determined by the slower actuating device with the actual pattern projected into the projection area determined by the faster actuating device. Embodiments of the invention may, therefore, provide a system which can achieve high resolution projections at a wide range of angles from a source.

The first actuating device typically has a smaller range of motion due to its higher speed of movement. Therefore, whilst the first actuating device can provide the function of projecting the laser beam (e.g. by scanning) with a high resolution and high quality rendering (due to the speed of the actuating device) it can only do so over a relatively limited area. However, the second actuating device, which typically has a greater range of motion due to its lower speed of movement, can be used for aiming the resulting projection at a wide range of locations within the zone.

This avoids the need to be able to project light simultaneously over a large area to be able to form images at a range of locations, which is how traditional projectors operate. Using embodiments of the invention, for example, when projecting visible images, a small number of image data elements or 'pixels' are needed to display a projection of an image with a high pixel density anywhere within a large area, as the pixels are not stretched out across the entire area. In other words, embodiments of the invention can generate a relatively small, high resolution, projection which can be moved anywhere within a relatively large zone.

The first reflecting moveable surface may be provided by a first moveable element.

The first actuating device and the second actuating device may be collocated in the same device and/or in the same housing. Alternatively the first actuating device and the second actuating device may be remote from each other in separate devices and/or housings.

In a set of embodiments, in use the first actuating device scans at its resonant frequency while the second actuating device is quasi-static. In another set of embodiments, the first actuating device and the second actuating device are both quasi-static, e.g. with the first actuating device having a lower deflection angle than the second actuating device, allowing it to move faster. For example the first actuating device may have a maximum speed (e.g. of deflection) that is at least 10 times (e.g. at least 100 times) the maximum speed (e.g. of deflection) of the second actuating device (e.g. with a smaller field of view compared to the second actuating device).

In a set of embodiments, the second actuating device comprises a second reflecting moveable surface, e.g. provided by a second moveable element. In a set of such embodiments, the first actuating device is arranged to direct an incident laser beam to the second actuating device. This means that a laser beam incident on the first actuating device may be deflected from the first actuating device to the second actuating device, because in such embodiments the first actuating device and second actuating device are separate from one another. Thus, the first actuating device may be positioned in the light path of the laser beam between a laser source and the second actuating device.

Separating the first actuating device and the second actuating device, so that the first actuating device is arranged to direct an incident laser beam to the second actuating device, may help to reduce potential problems caused by vibrations of the other actuating device. For example, if the first actuating device is oscillating, then having the second actuating device separate from the first actuating device may reduce the likelihood that the oscillations will cause undue movement of the second actuating device or the need to mitigate such transferred vibrations.

In an alternative set of embodiments, the first actuating device is mounted to the second actuating device so that movement of the second actuating device causes movement of the first actuating device independently of movement of the first reflecting moveable surface. In this way, the second actuating device acts as a tilting platform for the first actuating device. In such embodiments the second actuating device need not have a reflective surface, although may do so for other purposes as will be explained below.

In a set of embodiments, the first actuating device is arranged to operate in a resonant mode comprising oscillating the first reflecting moveable surface about said one or more axes. Therefore, the first actuating device may be a scanning mirror, e.g. for scanning out a visible image or for scanning an invisible beam across an area for locating an object or a device (e.g. a device-to-be-charged).

In a set of embodiments, the second actuating device is arranged to tilt about two or more axes and have a greater range of motion, about at least one of said axes, than the first actuating device. Therefore, the second actuating device may have a greater angle of deflection (e.g. having a tilt angle of at least 1.5 times greater than the tilt angle of the first actuating device) which allows the laser beam to be projected to a wide range of locations within a zone. The second actuating device may have a maximum deflection or tilt angle that is at least 3 times (e.g. at least 5 times, e.g. at least 10 times) the maximum deflection or tilt angle of the first actuating device.

The first and/or second reflecting moveable surface(s) is/are preferably mirrored.

In a set of embodiments, the first and/or second moveable reflecting element comprise(s) a plurality of individually addressable piezoelectric sections. Therefore, the first and/or second moveable reflecting moveable element may (each) be a deformable moveable element which can change shape on actuation (e.g. the surface of the deformable moveable element may change curvature). Upon actuation there may be minimal (e.g. zero) lift around the perimeter of the deformable moveable element and maximal lift (e.g. of several hundred micrometres) at the centre of the deformable moveable element, thus giving a curved profile. The extent of this maximal lift may depend on the diameter of the moveable element - e.g. if a greater lift is desired, then a moveable element having a greater diameter can be selected. The deformable moveable element may be thicker or thinner than the actuator arm(s). For example, a deformable moveable element which is thicker than the actuator arms will provide a smaller maximal lift, however, a reduced flexibility may provide greater deflection of the moveable element (e.g. more degrees of freedom). In a set of embodiments, the deformable moveable element has thickness equal to the actuator arm(s) or within 25%, e.g. within 10% of the thickness of the actuator arm(s). The deformable moveable element having a similar thickness to the actuator arm(s) may help to make the fabrication process of the actuating device simpler, therefore, resulting in lower manufacturing costs.

The or each deformable moveable element may comprise a first individually addressable piezoelectric section and a second individually addressable piezoelectric section. Each section may have any suitable shape. The deformable moveable element may comprise concentric sections. In a set of embodiments, the first section is circular and the second section is an annulus surrounding the first section (e.g. the first section and second section being concentric). Applying a voltage to just the first section of the deformable element may result in a curved (e.g. concave) deformation of the deformable element and applying a voltage to just the second section of the deformable element may result in the opposite (e.g. convex) deformation. Therefore, the deformable element, can be curved in both directions (e.g. in a convex or concave manner). There may be more concentrically arranged sections (e.g. further annuli) surrounding the first section. An advantage of this may be improved control of the shape of the lens, e.g. which may lead to better control of the focussing or defocussing of light (e.g. a laser beam).

In a set of embodiments, the or each deformable moveable element has an upper surface and a lower surface wherein both the upper surface and lower surface have an optically reflective surface (e.g. a mirrored coating). This allows the moveable element to act as a reversible mirror. As there is no need for a mass to keep the deformable moveable element stiff, the lower surface of the deformable moveable element may also be used. Therefore, the corresponding actuating device may be dual-sided (e.g. upon actuation, the upper surface may comprise a convex shape for focussing and the lower surface may comprise a concave shape for defocussing).

A deformable moveable element may provide an actuating device with not only a high deflection angle, but also the ability to focus and de-focus light. Furthermore, when the deformable moveable element has a mirrored surface, the ability to focus and defocus light may remove the need for focussing optics, i.e. further reducing the overall size of the device.

A deformable reflecting moveable surface may be useful in situations where the beam is used for searching for an object (e.g. for searching for a device-to-be-charged in a wireless charging system). For example, a wide beam may be used for scanning a zone when there is little or no information available regarding the location of the object - so that a larger area can be swept or scanned to try to 'hit' or 'find' the object. Knowledge of the object's location can allow a smaller beam to be used, by deforming the reflecting moveable surface, when the location of the object has been narrowed down. If the object is a device-to-be-charged and the laser beam is a charging beam, then a narrower beam can advantageously deliver more power density than the wider beam.

In a set of embodiments, each actuating device is actuated by applying one or more voltages thereto, e.g. a DC voltage for the second actuating device and an AC voltage for the first actuating device.

In a set of embodiments, the second actuating device comprises:
at least one actuator arm comprising a piezoelectric membrane and having a width at least ten times its thickness; and
a moveable element, connected to the actuator arm, such that actuation of the actuator arm causes movement of the moveable element.

Such an actuating device has a piezoelectric actuator arm in the form of a thin membrane. It will be appreciated by the skilled person that when the piezoelectric arm is actuated, i.e. a voltage is applied, an inverse piezoelectric effect results in a dimensional change and/or a deformation of the membrane. The movement caused by the dimensional and/or deformational change of the actuator arm causes the moveable element to move in a desired direction. Making the actuator arm in the form of a thin membrane, i.e. having a width at least ten times its thickness, may allow for a large movement, e.g. deflection, of the moveable element of the actuating device. The actuator arm having a width at least ten times its thickness enables the actuating device to be relatively stiff and robust whilst still providing relatively large deflections. This is a particularly suitable design for the second actuating device, which requires greater deflection angles than the first actuating device. Furthermore, it allows for the creation of robust actuating device designs that do not have weak points that would be easy to break during operation.

The actuator arm could be arranged so that piezoelectric deflection is provided throughout its length by application of a voltage thereto. In a subset of such embodiments however, the actuator arm comprises a plurality of independently addressable piezoelectric segments. This allows only part of the arm to be actuated by applying a voltage to one or more segments thereof whilst not applying a voltage to one or more other segments thereof. This may provide a greater degree of control over how the moveable element is moved. In such embodiments, typically the second actuating device comprises control electronics configured to control the actuation of the actuator arm(s) - e.g. by selectively applying a voltage to one or more actuator arms or segments thereof.

In a set of embodiments, the moveable element comprises the second reflecting moveable surface.

In a set of embodiments, the first actuating device is mounted to the moveable element. Thus in such embodiments, the first actuating device is mounted to the second actuating device so that movement of the second actuating device causes movement of the first actuating device independently of movement of the first reflecting moveable surface as previously outlined.

In a set of such embodiments the second actuating device comprises a single actuator arm extending at least partially around a perimeter of the moveable element. The actuator arm may extend at least half-way around said perimeter of the moveable element - e.g. at least three quarters of the way around said perimeter of the moveable element.

Preferably, the single actuator arm curves around the perimeter of the moveable surface. This curved shape of the single actuator arm allows designs to be made which have no 'weak spots' - i.e. spots at which the actuator arm could easily break.

In another set of embodiments the second actuating device comprises a plurality of actuator arms each connected to the moveable element; wherein each of the plurality of actuator arms can be actuated independently to move the moveable element. Preferably each arm comprises a plurality of individually addressable piezoelectric segments. By actuating one or more segments or groups thereof across the separate arms, a high degree of control and different types of movement of the moveable element may be achieved.

Each arm may comprise an inner segment proximal to the moveable element and an outer segment distal to the moveable element. In a set of such embodiments, the inner segment of each actuator arm is curved, e.g. through 90 degrees, and the outer segment of the actuator arm is straight. This may provide a 'spiral' arrangement of the actuator arms.

The Applicant has found that a second actuating device benefitting from the membrane actuator arm structure in accordance with the foregoing embodiments may be capable of increased angular movement in comparison with existing MEMS solutions -e.g. giving very high optical deflection angles of 25° to 30° for a 3 mm mirror in (quasi)static operation.

In a set of embodiments the second reflecting moveable surface has an aperture size between 0.1 mm and 50 mm, e.g. between 0.5 mm and 10 mm - e.g. between 1mm and 5 mm.

The laser beam may have any suitable wavelength. For example, in a set of embodiments the laser beam has a visible wavelength for projecting a visible image. Therefore, when viewed from another aspect the invention provides, a projection system comprising:
a visible laser source for generating a visible laser beam and
a system for deflecting the laser beam into a zone according to the first aspect;
wherein the projection system is arranged to generate a visible image in the zone using the visible laser beam.

The Applicant has appreciated that other components could be used to add further functionality to the system. In a set of embodiments therefore the system comprises an optical sensor arranged to capture image data of at least part of the projection area. Thus, the optical sensor may 'see' what is being projected. This could be useful, for example, in implementing a feedback loop to adjust or correct the projected image, or to detect user interaction with the image, as described in further detail below.

In a set of embodiments the optical sensor is aligned with an optical path of the laser beam. This may give useful two-dimensional position information. In another set of embodiments the system comprises a moveable imaging mirror arranged to deflect light from the projection area to the optical sensor, wherein the moveable imaging mirror is arranged to change a field of view of the optical sensor. Thus in this arrangement the optical sensor has a separate optical path to the optical path of the laser beam which may be beneficial in giving three-dimensional information and in providing greater flexibility as the field of view of the optical sensor can be steered by an independent mirror.

The optical sensor may comprise a plurality of pixels in an array (e.g. comprising a camera). In a set of embodiments however, e.g. where an independent imaging mirror is provided, the optical sensor comprises a single pixel or small number of pixels (e.g. fewer than 1000), e.g. to allow the sensor to observe a single pixel or small number of pixels of the projected image at a time as the moveable imaging mirror can change the position of the pixel to be captured. In the event that such a low pixel sensor captures an optical signal which is the integral of some neighbouring pixels, such a net smearing effect could be countered by using compressive sensing techniques. A low pixel sensor can also be used to help to ensure that the privacy of the system's users is maintained as no meaningful image of a user could be obtained.

In alternative embodiments comprising an optical sensor, the second actuating device comprises a or the second reflecting moveable surface arranged to deflect light from the projection area to the optical sensor such that the optical sensor can image at least part of the projection area. This means the optical sensor can use the same actuating device (i.e. the second actuating device) as the laser beam to image the projection area. The second actuating device determines where the projection area is located by aiming its moveable surface, and so light from this projection area will be reflected to the optical sensor via the second actuating device. This may provide users of the system with enhanced privacy as only the relevant portion of the zone is viewed by the optical sensor. The second reflecting moveable surface may be positioned behind or in the same plane as a substantially smaller (e.g. centrally positioned) first reflecting moveable surface. In such embodiments, the first reflecting moveable surface may have an area at least 4 times smaller than the area of the second moveable surface, e.g. at least 5 times smaller.

In some embodiments, where the first actuating device is arranged to direct an incident laser beam to the second reflecting moveable surface of the second actuating device, the system comprises:
an optical sensor; and
a beam splitter disposed between the first actuating device and the second actuation device;
wherein the beam splitter is arranged to transmit the laser beam to the second reflecting moveable surface and to direct light from the projection area to the optical sensor to allow the optical sensor to image at least part of the projection area.

The beam splitter may be arranged in the light path of the laser beam, between the first actuating device and the second actuating device. The optical sensor may be positioned so that light reflected off a surface of the beam splitter, which may be facing toward the second reflecting moveable surface, is directed to the optical sensor.

In a subset of embodiments in which the system comprises an optical sensor, the system further comprises:
a feedback system comprising:
   an optical sensor and
   a processing system,
the processing system being configured to:
   receive captured image data of the zone from the optical sensor; and
   use said captured image data to instruct the visible laser source to adjust the visible image and/or use said captured image data to control the movement of the first actuating device and/or the second actuating device.

Thus, in such embodiments, the image data captured by the optical sensor is used to inform a feedback system (e.g. for adjusting what is projected by the system and/or where it is projected based on what the optical sensor 'sees').

The laser source may simply be instructed to adjust the visible image by adjusting the properties of the laser beam output by the visible laser source. For example, the laser source may receive such instructions from a separate processor. Alternatively, the laser source may itself be configured to determine how to adjust the visible image based on the captured image data.

In one example, if the feedback system observes via the optical sensor that the pattern is "skewed", then the laser source may adjust the projected image or pattern, e.g. with a perspective transform. The visible image may be adjusted in any suitable way, for example, the laser source may be modulated or turned on or off at different points during a scan.

In a set of embodiments, the system is arranged to generate the visible image by scanning said visible laser beam; the scanning comprising:
moving the first reflecting moveable surface to carry out a scan;
wherein said scan follows a scanning path comprising one or more scan lines, each scan line comprising a plurality of points, each point representing a pixel of the visible image;
wherein the visible laser source is configured to determine which of the plurality of pixels is illuminated by the visible laser beam for each scan line.

Therefore, the first actuating device may provide a scanning functionality for the system, which allows a visible image to be projected as described above.

Thus, the visible laser source is configured to determine which of the plurality of pixels is illuminated by the visible laser beam for each scan line. In other words, the laser source may turn the laser beam "off" or "on" at different points in the scan so that in the visible image the "on" pixels are illuminated. The visible laser source may be configured to determine the wavelength of the visible laser beam so that the pixels of the visible image may have specific colours.

The scanning path may comprise a plurality of parallel scan lines, a raster scan or a spiral scan. In another subset of such embodiments, the scanning comprises moving the first reflecting moveable surface to carry out a vector scan; wherein said vector scan follows a scanning path which traces the visible image. Projecting the visible image with a vector scan may help to reduce the power consumption of the system. Drawing the image in this way allows a lower intensity laser beam to be used which draws less power from the system. In another subset of such embodiments, the scanning comprises moving both the first reflecting moveable surface and the second actuating device to carry out a vector scan, e.g. to increase the total field of view.

Although the invention has been primarily been described so far in the context of projecting visible images, there may be other applications which may use laser beams having invisible wavelengths.

Thus according to another embodiment of the invention, the invention provides a wireless charging system comprising a system for deflecting a laser beam into a zone according to the first aspect, wherein:
the laser beam is a charging laser beam;
the wireless charging system is arranged to wirelessly charge at least one device-to-be-charged, said device-to-be-charged comprising a photovoltaic cell for converting incident light into electrical energy;
the wireless charging system comprises a charging laser source arranged to generate a charging laser beam; and
the projection area comprises the photovoltaic cell of the device-to-be-charged.

Thus, the system of the first aspect may be used in a wireless charging system to deflect a charging laser beam into a zone for wirelessly powering or charging a device. The charging laser beam may be directed to a photovoltaic cell of a device by movement of the first actuating device and the second actuating device. As mentioned above, the laser beam need not have a wavelength in the visible part of the spectrum. Instead, the charging laser beam preferably has a wavelength in the near-infrared part of the spectrum.

Therefore, in addition to or instead of projecting a visible image, the system in accordance with the first aspect of the invention may deflect a charging laser beam into a zone (e.g. to optically charge or power a device in the zone).

Furthermore, the wireless charging system may transmit a visible image as well as laser light for charging a device. Therefore, in a subset of such embodiments of the invention, the projection area is a first projection area and the projection centre is a first projection centre; the wireless charging system comprising:
a visible laser source for generating a visible laser beam;
wherein:
   the first reflecting moveable surface is arranged to tilt about two or more axes so as to deflect the laser beam to define a second projection area about a second projection centre;
   the second actuating device is arranged to direct the visible laser beam so as to determine a location of the second projection centre in the zone; and
   the second projection area comprises the visible image.

Thus, a visible laser beam may be generated by the visible laser source which follows the light path of the charging laser beam (e.g. by deflecting off the first actuating device and the second actuating device). Therefore, the light path of the charging beam and the visible beam may be the same, as both of the beams may be deflected by the first actuating device and the second actuating device. The visible laser source and charging laser source may be collocated within a common laser source. They may operate according to a time-division scheme, so that in between pulses of the charging laser, the visible laser may be turned on. This arrangement allows for a more compact design, which can be advantageous for designing projectors for small loT devices (e.g. wearable devices).

In an alternative subset of embodiments, the projection area is a first projection area and the projection centre is a first projection centre; the wireless charging system further comprising:
a visible laser source for generating a visible laser beam;
a third actuating device comprising a third reflecting moveable surface arranged to tilt about two or more axes so as to deflect the laser beam to define a second projection area about a second projection centre; wherein:
   a fourth actuating device or the second actuating device is arranged to direct the visible laser beam so as to determine a location of the second projection centre in the zone;
   the third actuating device is able to move faster than the second actuating device; and
   the second projection area comprises the visible image.

Thus, the system may comprise a visible laser source for generating a visible laser beam as well as a charging laser source for generating a charging laser beam. While the first actuating device may be arranged to deflect the charging laser beam, a third actuating device may be arranged to deflect the visible laser beam. The first actuating device and third actuating device may be similar or identical - e.g. they may be fast moving (e.g. oscillating) which may allow them to be used for scanning the charging laser beam and the visible laser beam respectively.

There are a number of possible arrangements in accordance with the foregoing subset of embodiments. For instance, the light path of the charging beam and the visible beam may both be deflected by the second actuating device. As the second actuating device determines the where in the zone the projection area is located, this means that the visible image may helpfully indicate to a user where the charging laser is aiming. Alternatively, the light path of the charging beam and the visible beam may be separate, meaning that, instead of being deflected by the second actuating device, the visible laser beam is deflected by a fourth actuating device. This allows an image to be projected in a different place - e.g. to indicate information or a menu for the device being charged.

Therefore, the system may comprise two different projection areas (e.g. the charging laser beam spot and the projection of the visible image).

In the wireless charging system, the laser beam is a charging laser beam which may provide power to a device or an energy storage element (e.g. a battery or super capacitor) when incident upon a photovoltaic cell. The first reflecting moveable surface and the third reflecting moveable surface may be mirrored surfaces and their respecting actuating devices may operate in an oscillating or resonant mode i.e. to scan the visible image (e.g. via a vector or raster scan) and/or to scan the charging laser beam (e.g. to search for a device-to-be-charged).

For embodiments comprising a fourth actuating device, the fourth actuating device may comprise a fourth reflecting moveable surface. The second reflecting moveable surface and the fourth reflecting moveable surface which may determine the location of the first and second projection area respectively, may have slower moving mirrored surfaces with a greater deflection angle or tilt angle compared to the first and second moveable surfaces. The second actuating device and the fourth actuating device may have substantially the same maximum speed - e.g. within 10%, e.g. within 5%. They may also have substantially the same maximum deflection angle. The first actuating device and the third actuating device may have substantially the same maximum speed - e.g. within 10%, e.g. within 5%. Again, they may also have substantially the same maximum deflection angle.

Although the principles set out herein have applications in wireless charging systems, it has been appreciated by the Applicant, that there are numerous further applications which can make use of these principles.

In a set of embodiments the system is arranged to track motion of at least one object, wherein:
the first reflecting moveable surface is arranged to tilt about two or more axes so as to deflect the laser beam to define and illuminate a tracking area about a tracking centre;
the second actuating device is arranged to direct the laser beam so as to determine a location of the tracking centre in the zone; and
an optical sensor is arranged to image the illuminated tracking region to track the at least one object; wherein:
   the optical sensor is configured to send captured image data to a processing system to track the motion of the at least one object.

Thus, to track the motion of the at least one object, the movement of the first actuating device and/or the second actuating device may be controlled, based on information received by the optical sensor, to direct the laser beam to the at least one object. The laser beam may be a charging laser beam. Where the laser beam is a charging laser beam, the object may be a photovoltaic cell of a device-to-be-charged.

The object may be any suitable object to be tracked. In some embodiments, the object is at least part of a human eye. Therefore, embodiments of the invention may be able to achieve eye-tracking, e.g. for use in video games etc..

In a set of embodiments, the system comprises a wearable device on which are mounted the first and second actuating devices and a visible laser source for generating a visible laser beam, the system being arranged to generate a visible image by deflecting the visible laser beam into the zone.

Another embodiment of the invention provides a system for generating a visible image with a laser beam by deflecting a visible laser beam into a zone from a wearable device, the wearable device comprising:
a first actuating device comprising a first reflecting moveable surface arranged to tilt about two or more axes so as to deflect a laser beam to define a projection area about a projection centre;
a second actuating device arranged to direct the laser beam so as to determine a location of the projection centre in the zone;
wherein the first actuating device is able to move faster than the second actuating device; and
wherein the projection area comprises the visible image.

Thus, it will be seen that in accordance with the foregoing embodiment of the invention, the components of the system are integrated within a wearable device for projecting a laser from the wearable device. The wearable device may, therefore, effectively comprise a micro projector for projecting the visible image via the first and second actuating devices. Embodiments in accordance with the foregoing embodiment may help the wearable device project high-resolution images at a large range of angles around the wearable device. The visible image may comprise information relating to the operation of the system. This is advantageous in instances when the device does not have a display means. In such circumstances, the visible light pattern may allow the user to obtain information relating to the operation of the system, e.g. to confirm whether a wireless charging system is in operation or to display options to a user for selection, without the need of a display screen.

In a subset of such embodiments, a distance between the first actuating device and the second actuating device is less than 1cm, e.g. less than 0.5cm. This enables easy integration into a wearable device.

In another subset of embodiments, the wearable device comprises an optical sensor. The optical sensor may be a 3D time of flight camera or a monochrome, low power camera.

A distance between the first actuating device and the optical sensor may be less than 1cm. The distance between the second actuating device and the optical sensor may be less than 1cm.

In another subset of embodiments, a package comprising the optical sensor, the first actuating device and the second actuating device (e.g. and a visible laser source) may be sized and arranged to have a collective dimensional envelope of less than 1cmx1cmx1cm (e.g. meaning that the package is small enough to be embedded into an earbud or other small wearable). Embodiments in which the first actuating device is mounted to the second actuating device in a single component as previously set out may be particularly beneficial in achieving such compact arrangements. In embodiments comprising an optical sensor, the distance between the optical sensor and the single component may be less than 1cm, e.g. less than 0.7cm, e.g. less than 0.5cm. In embodiments comprising a visible laser source the distance between the laser and the single component may be less than 1cm, e.g. less than 0.7cm, e.g. less than 0.5cm.

According to another embodiment of the invention, the invention provides a projection system comprising at least one projector module, the projector module comprising:
a laser light source generating a laser light beam;
a first actuating device comprising a first reflecting moveable surface arranged to tilt about two or more axes so as to deflect the laser beam to define a projection area about a projection centre;
a second actuating device arranged to direct the laser beam so as to determine a location of the projection centre in the zone;
wherein the first actuating device is able to move faster than the second actuating device.

The projector module may have any of the optional features of the system for deflecting a laser beam into a zone which are set out above.

According to another embodiment of the invention, the invention provides an imaging system comprising at least one imaging module, wherein the imaging module comprises:
a camera;
a first actuating device comprising a first reflecting moveable surface arranged to tilt about two or more axes so as to deflect light to the camera from an imaging area defined about an imaging centre;
a second actuating device arranged to direct light from the imaging area and arranged to determine a location of the imaging centre in the zone;
wherein the first actuating device is able to move faster than the second actuating device.

The imaging module may have any of the optional features of the system for deflecting a laser beam into a zone which are set out above.

The Applicant has further recognised that it would be advantageous to be able to project a plurality of images in different locations using a plurality of projecting modules. Thus another embodiment of the invention provides a projection system comprising a plurality of projection modules, each projection module comprising:
a projector arranged to project an image onto a projection area defined about a projection centre; and
an actuating device arranged to determine a location of the projection centre;
wherein the plurality of projector modules each determine respectively different projection centres.

This principle also extends to imaging applications. Thus, when viewed from another embodiment of the invention, the invention provides an imaging system comprising a plurality of imaging modules, each imaging module comprising:
a camera arranged to image an imaging area defined about an imaging centre; and
an actuating device arranged to determine a respective location of the imaging centre;
wherein the plurality of imaging modules each determine respectively different imaging centres.

A plurality of projection modules or imaging modules are therefore provided in accordance with the invention set out above. The projection system may, for example, allow a plurality of projections (e.g. images) to be displayed at different positions within a relatively large zone (e.g. anywhere within a room) with those positions determined by a corresponding actuating device. Similarly, the imaging system may allow a plurality of images may be captured at different positions in the zone. Although the projection and/or imaging centres are respectively different (e.g. in different locations), the projection and/or imaging areas may still overlap - e.g. to avoid gaps in the projected and/or captured image.

Having a plurality of projection modules advantageously allows a number of smaller projections to be 'stitched' together into a larger projection. This allows a higher resolution projection to be projected across a larger area only in areas where the projection is needed. This replaces the known technique of simply displaying a projection evenly across a large area with a single projector. In embodiments according to the aspect described above, a projection of a larger image may be formed by arranging a plurality of projections of smaller higher resolution sub-images into the larger image, each sub-image being projected by a respective projector module. The sub-images may be stitched together in any suitable way and, using the actuating device, the location of the projection centres may be changed - e.g. depending on the image that is to be projected. In this way, the resolution of a projected image need not be uniform over the entire zone, but instead can be high only where it needs to be - in discrete areas where this suits a given application.

Corresponding benefits apply to the imaging apparatuses of imaging systems - i.e. a given imaging apparatus may 'see' with greater detail only an area of interest. Thus, power consumption and overall cost can be reduced by using a plurality of projection modules and/or a plurality of imaging modules to project and/or capture a rich, high resolution image that has lower resolution in less used or unused areas. This avoids having to 'over-engineer' the imaging system relative to areas which don't require high resolution and helps to enrich projections in areas where higher resolution is required.

The actuating device in either case may be the second actuating device described herein, which is generally able to exhibit a relatively large range of movement (i.e. deflection) while still being robust and resistant to breakage.

In such a set of embodiments, the projector modules may comprise the first actuating device described herein.

The imaging module may additionally comprise the first actuating device. The camera may be arranged to capture image data of the imaging area (e.g. at least one pixel at a time).

Features of any aspect or embodiment described herein may, wherever appropriate, be applied to any other aspect or embodiment described herein. Where reference is made to different embodiments or sets of embodiments, it should be understood that these are not necessarily distinct but may overlap.

Certain embodiments of the invention will now be described, by way of example only, with reference to the accompanying drawings, in which:
FIG. 1 is a schematic view of a system in accordance with an embodiment of the invention;
FIGS. 2A and 2B show defocussing of the deflected beam of FIG. 1;
FIG. 3 is a schematic view of a system in accordance with another embodiment of the invention;
FIG. 4 shows defocussing of the deflected beam of FIG. 3;
FIG. 5 is a schematic view of a system, in accordance with another embodiment of the invention, comprising a camera;
FIG. 6 is a schematic view of a system in accordance with another embodiment similar to that of FIG. 5, additionally including a feedback loop;
FIG. 7 is a schematic view of an embodiment similar to that of FIG.1 with an additional beam splitter and camera;
FIG. 8 is a schematic view of an embodiment similar to that of FIG.1 with an additional imaging mirror and camera;
FIG. 9 is a schematic view of an embodiment similar to that of FIG.1 with an additional camera in another arrangement;
FIG. 10 is a schematic view of an embodiment similar to that of FIG.3 with an additional single pixel camera;
FIG. 11 is a schematic view of an embodiment similar to that of FIG.3 with an additional camera having a similar optical path to the laser beam;
FIGS. 12A and 12B show a wireless charging system in accordance with an embodiment of the invention;
FIG. 12C shows a wireless charging system in accordance with another embodiment of the invention;
FIGS. 13A and 13B show how embodiments of the invention may be used to display options for gesture detection;
FIG. 14 shows a schematic view of an embodiment of the invention used for robust voice recognition;
FIG. 15 shows a schematic view of an embodiment of the invention used for real-time eye tracking;
FIG. 16 shows a schematic view of an embodiment of the invention used for tracking a moving device-to-be-charged in a wireless charging system;
FIG. 17 shows a flowchart of the process used for the tracking scenario shown in FIG. 16;
FIG. 18 is a plan view of one embodiment of the second actuating device;
FIG. 19 is a plan view of another embodiment of the second actuating device;
FIGS. 20A to 20C show the single mirror component of FIGS. 3, 4, 10 and 11 in more detail;
FIG. 21 is a schematic view of an embodiment of the invention where the system is arranged to be compact for being embedded within a wearable device;
FIG. 22 is a schematic view of another embodiment similar to that of FIG. 21 using the single mirror component
Fig. 23 is a plan view of a variant of the central moveable element of the first or second actuating device;
Fig. 24 is a perspective view of the central moveable element shown in Fig. 23;
Fig. 25 is a perspective view showing the central moveable element of Fig. 24 upon actuation;
Fig. 26 is a side view of the central moveable element shown in Fig. 25;
Fig. 27 shows how the curvature of a reflecting central moveable element changes how light is deflected;
Fig. 28 shows a projector system in accordance with embodiments of the present invention;
Fig. 29 shows an example of a projector system in accordance with embodiments of the present invention; and
Fig. 30 shows another example of a projector system in accordance with embodiments of the present invention.

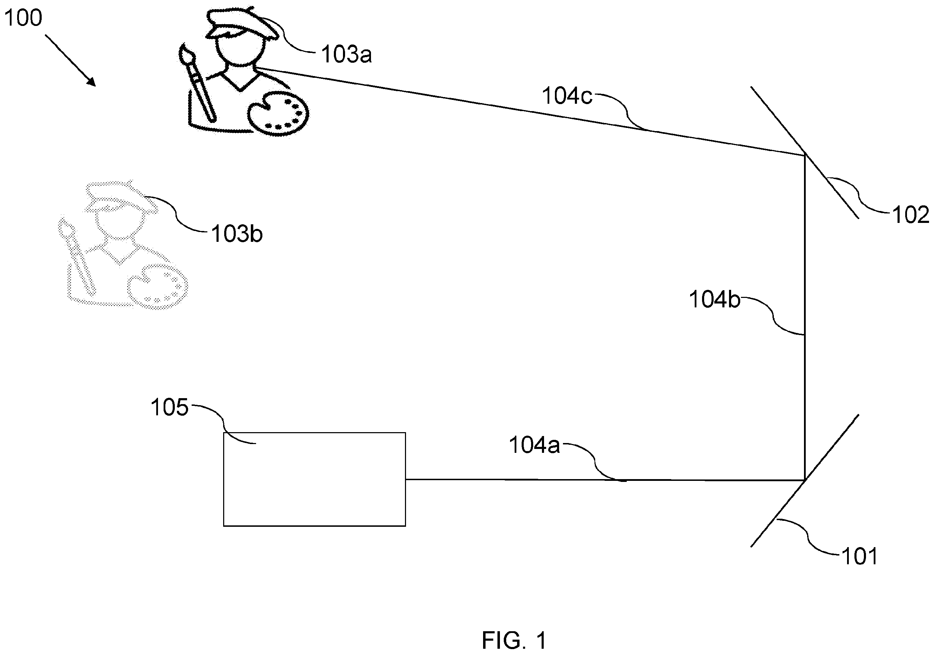

FIG. 1 shows a schematic diagram of a system 100 for deflecting a laser beam into a zone (e.g. a room), in accordance with an embodiment of the invention.

The system 100 comprises a first actuating device 101 and a second actuating device 102. The system also includes a laser beam source module 105 for generating a laser beam 104a, 104b, 104c. In this example, both actuating devices comprise moveable mirrors 101, 102 and are arranged to tilt about two or more axes. A processing module (not shown) may control both the laser beam source module 105 and the moveable mirrors 101, 102. The laser beam source module 105, the first actuating device 101 and second actuating device 102, may be connected to a power supply (not shown) via a wired or wireless connection.

The first actuating device 101 comprises a resonant oscillating mirror and is thus able to move faster than the second actuating device 102. The second actuating device 102 is quasi-static - i.e. it moves relatively slowly and infrequently between fixed positions. Therefore, the first actuating device will be referred to herein as the fast mirror 101 and the second actuating device will be referred to as the slow mirror 102. Movement of the fast and slow mirrors 101, 102 may be controlled by the application of a voltage or voltages - e.g. DC voltage may be applied to the slow mirror 102 such that a higher voltage results in a higher deflection angle and an AC voltage may be applied to the fast mirror 101 to achieve oscillating motion.

The fast mirror 101 is positioned at the output of the laser source module 105. The laser source module may be a visible laser source, e.g. a laser diode with a visible wavelength, e.g. the L450P1600MM laser diode from ThorLabs.

In operation, the laser beam source module 105 generates and transmits a laser beam 104a to the fast mirror 101.The first mirror 101 deflects the laser beam 104 to define a projection area about a projection centre, where a visible image 103a is produced. The beam 104b is deflected by the fast mirror 101 onto the quasi-static mirror 102 which deflects the beam 104c into the projection area.

This projection may be formed by the fast mirror 101 scanning the image in a raster scan pattern, spiral scan pattern or vector scan pattern etc.. In this particular embodiment, to project the image 103a, a signal from a processor (not shown) causes the fast mirror 101 to move rapidly in a pattern, for example, by drawing out a plurality of parallel scan lines repeatedly (i.e. a raster scan pattern). This allows the system to illuminate the projection area on a surface on which the visible laser beam 104 is incident. The projection area is composed of an array of image data elements (pixels). As well as controlling the movement of the fast and slow mirrors 101, 102 signals from the processor control switching the laser source 105 'on' or 'off' at various points in the scan to determine which pixels are illuminated by the laser beam 104. The result is a projected image 103a in the projection area about the projection centre (i.e. the centre of the image).

The location of the projection area may be changed by movement of the quasi-static mirror 102. Again, this may be caused by a signal from the processing module. For example, FIG. 1 shows the projection image 103b if it were to be moved to a different location by steering the slow mirror 102. The quasi-static mirror 102 may be kept static when it ends up pointing at the desired projection area.

Therefore, the fast mirror 101 can provide the function of projecting the laser beam (e.g. by scanning) with a high-resolution and high quality rendering (due to the speed of the actuating device). The slow mirror 102, on the other hand, is primarily used for aiming the laser beam 104c. Its large range of motion allows the slow mirror 102 to aim the high-resolution projection 103a at a wide range of different locations within a zone. The slow mirror 102 can achieve a greater deflection angle, than the fast mirror 101, about at least one of its two or more axes, which helps to increase the field of view of the entire system.

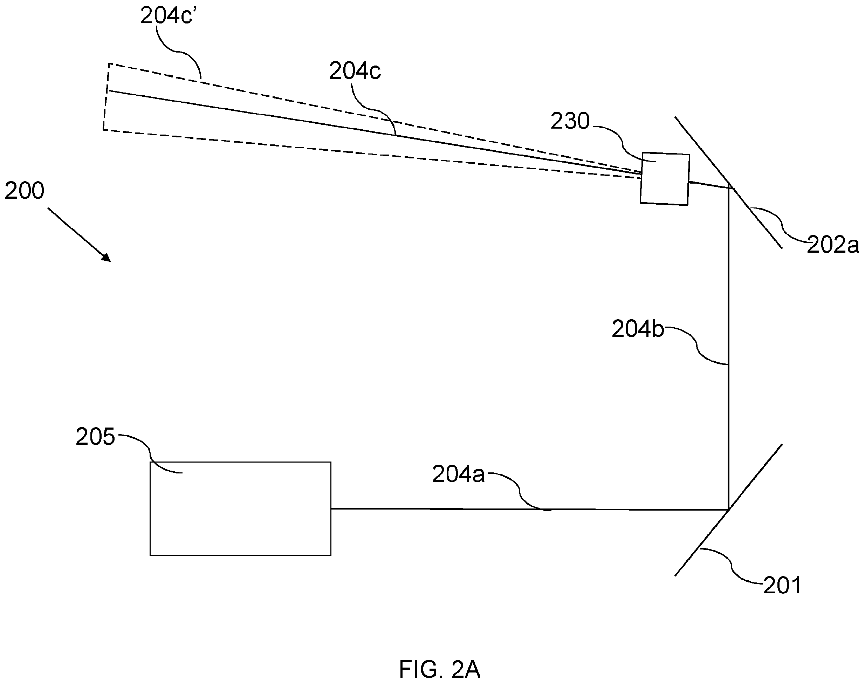

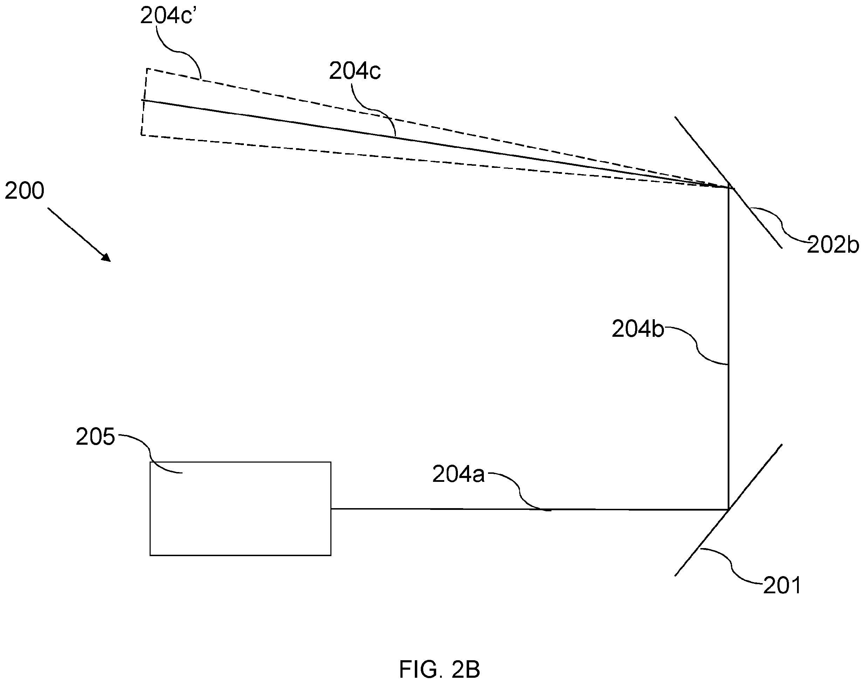

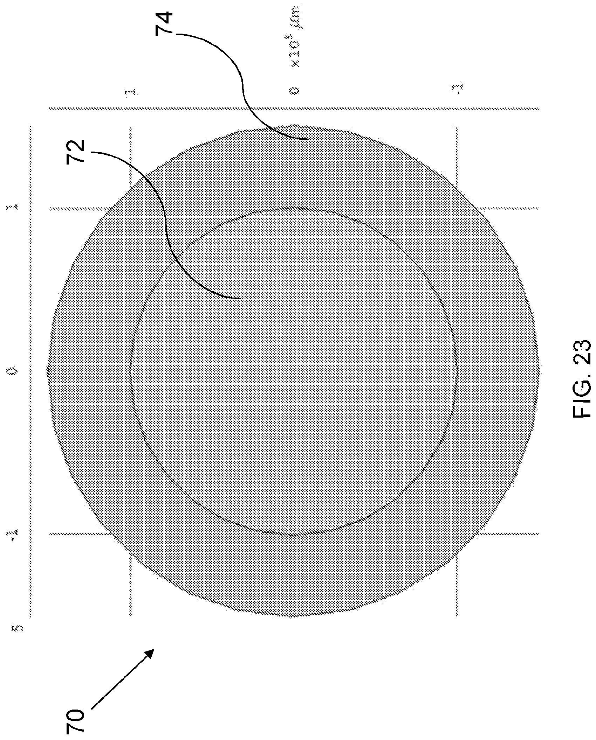

FIG. 2A shows a system 200 which enables defocussing of the deflected beam 204c of FIG.1. The laser beam source module 205 and the laser beam 204a, 204b, 204c it generates are the same (and may operate the same) as the corresponding features 105, 104a, 104b, 104c shown in FIG. 1. The fast mirror 201 of FIG. 2A may be the same as the fast mirror 101 of FIG. 1. The slow mirror 202a may be the same as the slow mirror 102 of FIG. 1, providing the function of steering the beam to a desired projection area. However, FIG. 2A shows additional optics 230 which can allow the beam to be focussed 204c or defocussed 204c'. For example, a telescope lens or beam expander 230 at the slow mirror 202a may be used for beam shaping. FIG. 2B shows the system of FIG. 2A where the focussing and defocussing of the light is instead achieved by a deformable mirror 202b. The operation of such a mirror 202b is described below with reference to FIGS. 23-27 .

In both examples, the defocussed beam 204c' is shown after it has been expanded. There are many applications which could benefit from this beamshaping ability, for example searching for an object with an optical beam. In order to make the search more efficient, the system may start by scanning a zone quickly with a wide beam and may progressively narrow the beam width as more location information is obtained by the device.

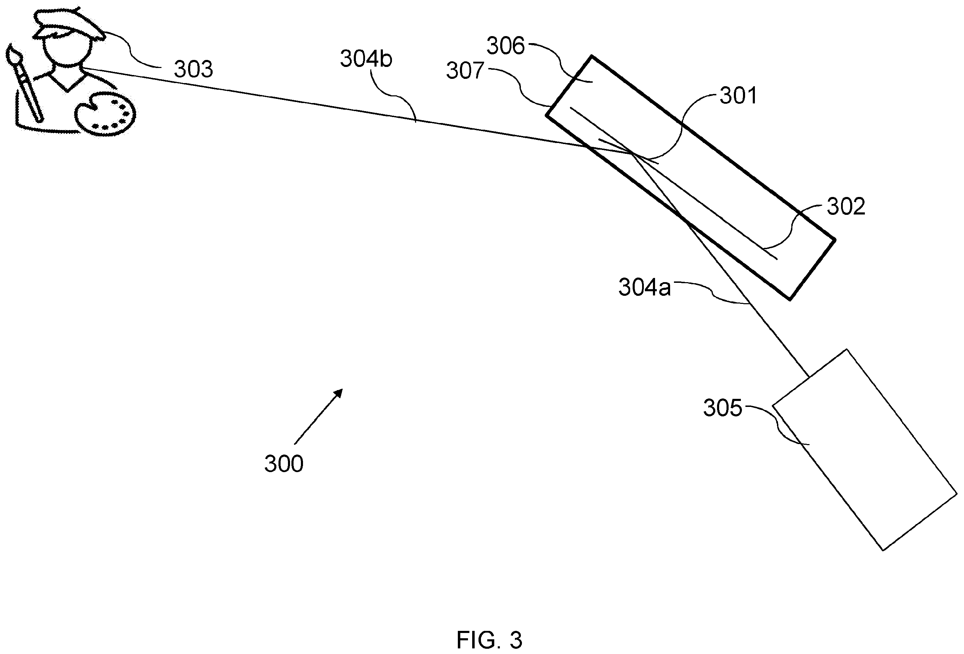

In FIGS.1 and 2, the slow and fast mirrors are separate components (but could still be housed within a common housing). However, they may be incorporated into a single component into the space-saving arrangement shown in FIG. 3.

FIG. 3 is a schematic diagram of a system 300 in accordance with another embodiment of the invention. This arrangement allows an image to be projected with a single, general-purpose mirror component 306. The projection 303, the laser beam source module 305 and the laser beam 304a, 304b it generates are the same (and may operate the same) as the corresponding features 103, 105, 104a, 104b shown in FIG. 1. However, the arrangement of the slow component 302 and the fast mirror 301 is different to the arrangement shown in FIGS. 1 and 2.

Here, the fast mirror 301 is mounted to a slow actuating device 302 forming a single mirror component 306 located within a common housing 307. The fast mirror 301 may be smaller than the slow actuating device 301 and optionally may be located centrally within (e.g. in front of or in plane with) the moveable surface of the slow actuating device 302. Although not essential, the slow actuating device 302 may comprise a reflective moveable surface (e.g. a mirrored surface). Either way, the slow actuating device 301 acts a moveable platform.

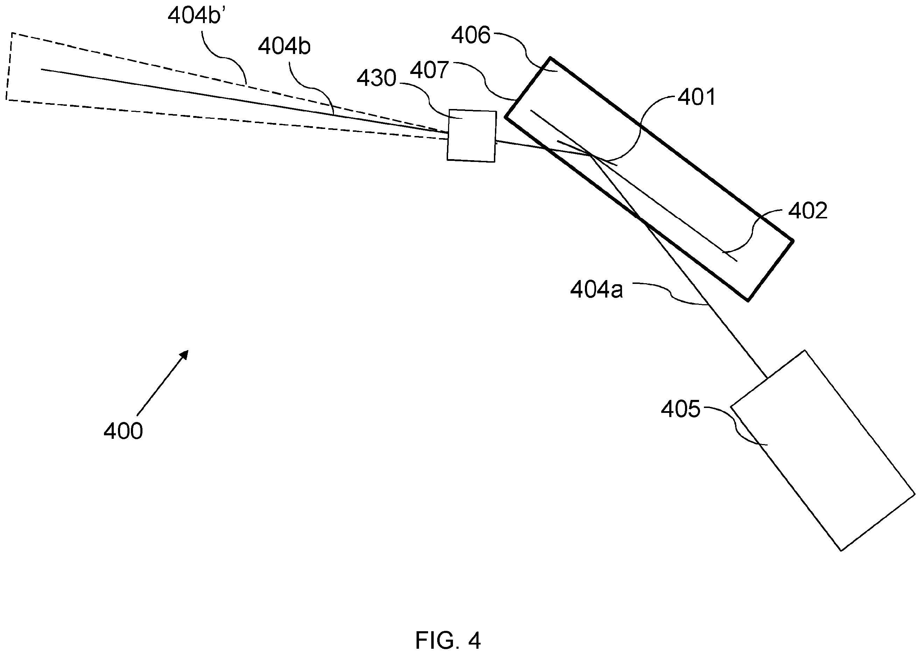

FIG. 4 shows a system 400 which enables defocussing of the deflected beam 404b of FIG.3. The single mirror component 406 (and the components it comprises 401, 402, 407), the laser beam source module 405 and the laser beam 404a, 404b it generates are the same (and may operate the same) as the corresponding features 306 (301, 302, 307), 305, 304a, 304b shown in FIG. 3. FIG. 4 shows additional optics 430 which can allow the beam to be focussed 404c or defocussed 404c'. For example, a telescope lens or beam expander 430 in front of the fast mirror 401 may be used for beam shaping. Alternatively, a deformable mirror may be provided in place of the fast mirror 401 (e.g. similar to the deformable mirror 202b of FIG. 2B).

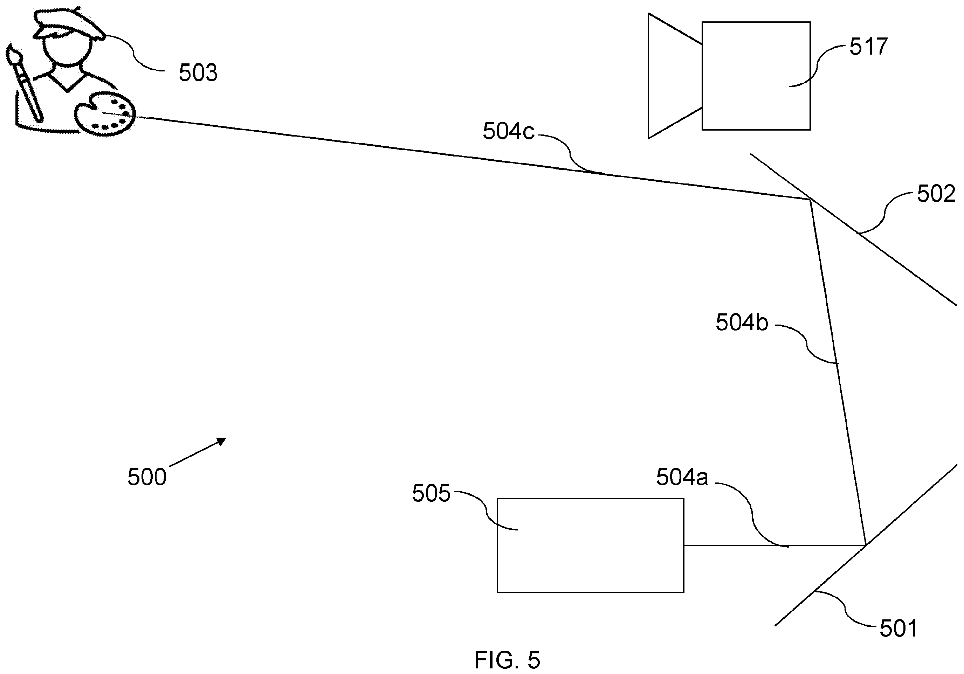

FIG. 5 shows a system 500 according to another embodiment of the invention similar to that of FIG. 1 with an additional camera 517 (i.e. an optical sensor) arranged so that its field of view includes the visible image 503. The fast mirror 501, the slow mirror 502, the laser beam source module 505 and the laser beam 504a, 504b, 504c it generates are the same (and may operate the same) as the corresponding features 101, 102, 105, 104a, 104b, 104c shown in FIG. 1. The laser beam 504a is generated by the laser source module 505 and directed toward a fast mirror 501. The laser beam 504b is deflected by the fast mirror 501 to the slow mirror 502. The slow mirror 502 deflects the laser beam 504c further toward the projection area, resulting in a projected image 503.

The camera 517 observes the picture 503 and may do one of several things. For example, the camera 517 may obtain information from the scene. One such example would be to detect gestures, e.g. where a finger may overlap an icon or object. The camera 517 may additionally or alternatively detect that a perspective change of the projected picture is needed, e.g. if the image is projected onto a slanted or curved surface. Furthermore, as the camera 517 is offset from the laser's optical path, the camera 517 may extract 3D information of an object in a scene, such as the position in Cartesian coordinates (e.g. the x, y, z location) of the finger, if, for example a known 'structured light' image is projected.

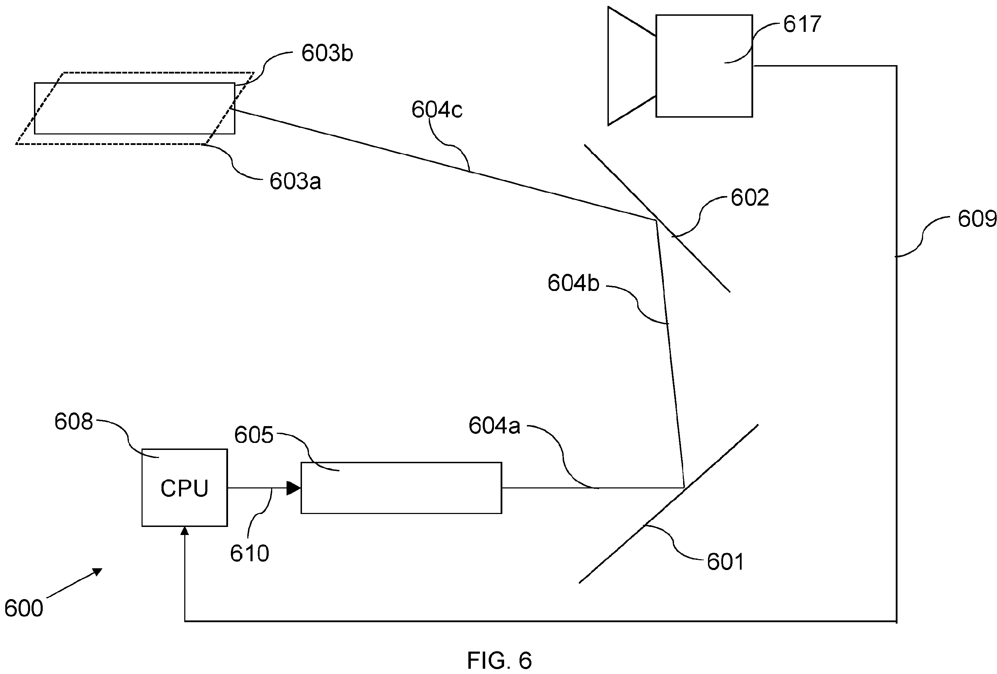

In gesture recognition, and other similar applications, sensed data (e.g. captured image data) may be used to inform a feedback loop which changes the operation of the system based on the sensed data. FIG. 6 shows an embodiment of a system 600 similar to that of FIG. 5, additionally including such a feedback loop.

The system 600 of FIG. 6 comprises a feedback system which includes an optical sensor (e.g. a camera) 617 and a processing system in the form of a Central Processing Unit (CPU) 608. The CPU 608 receives captured image data of the zone from the camera 617. The CPU 608 may subsequently use the captured image data to instruct a visible laser source module 605 to adjust the visible image 603a. This may involve changing the image that the laser source module 605 is instructed to project. The CPU 608 may alternatively or additionally use the captured image data to control the movement of the fast mirror 601 and/or the slow mirror 602. This may be useful for when the system is carrying out a vector scan, where movement of the fast mirror 601 determines the visible image that is projected.

The camera 617 observes a first image 603a and sends a message to the CPU 608 which is responsible for configuring the laser so that it projects a desired image, i.e. the second image 603b. The projected first image 603a may be changed to the desired second image 603b by applying an inverse perspective transform to the image. For example, if the feedback system (e.g. the optical sensor 617) observes that the visible image is "skewed", then the laser source module 605 may adjust the projected image (e.g. pattern) 603a, 603b with a perspective transform. Thus, the laser source 605 may project a different image 603b based on the image data captured by the optical sensor 617. In other words, the laser source 605 may adjust what is projected 603a, 603b based on what the optical sensor 617 sees.

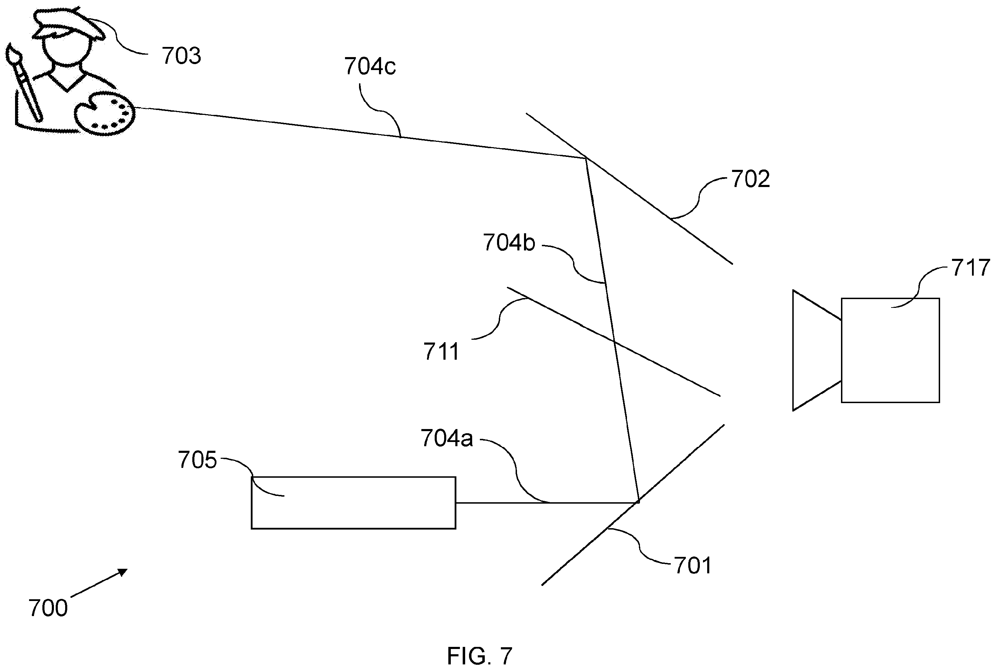

FIG. 7 shows another embodiment of a system 700 in accordance with the invention similar to the other separated mirror systems shown in FIGS. 1-2 and 5-6. The fast mirror 701, the slow mirror 702, the projection 703, the laser beam source module 705 and the laser beam 704a, 704b, 704c it generates are the same (and may operate the same) as the corresponding features 101, 102, 103, 105, 104a, 104b, 104c shown in FIG. 1. This system 700 additionally includes a beam splitter 711. The beam splitter 711 is arranged approximately mid-way between the fast mirror 701 and the slow mirror 702. The camera 717 is positioned so that light reflected off the side of the beam splitter 711 facing the slow mirror 702 may be directed to the camera 717.

The system 700 of FIG. 7 works similarly to the system of FIG. 1. The laser beam 704a is generated by a laser source module 705 and beams onto a fast mirror 701. The fast mirror deflects the laser 704b through the beam splitter 711 to the slow mirror 702. The slow mirror 702 then deflects the laser 704c, again, toward a desired projection area and projects a visible image 703 there.

The camera 717 receives light from the beam splitter 711, which means that the image captured by the camera 717 follows the motion of the slow mirror 702. Therefore, the camera 717 is restricted to seeing the projected image 703 (rather than other areas of a room), which has benefits from two perspectives. Firstly, this provides users of the system with increased privacy as the field of view of the camera 717 follows the projection area (where the visible image 703 is projected) rather than having a field of view that comprises the entire zone (e.g. an entire room). Secondly, the resolution of the image captured by the camera 717 is improved as the pixels in the camera 717 give high pixel density and thus high resolution where the image needs to be captured (as opposed to trying to image the whole scene, as is done in Figure 5).

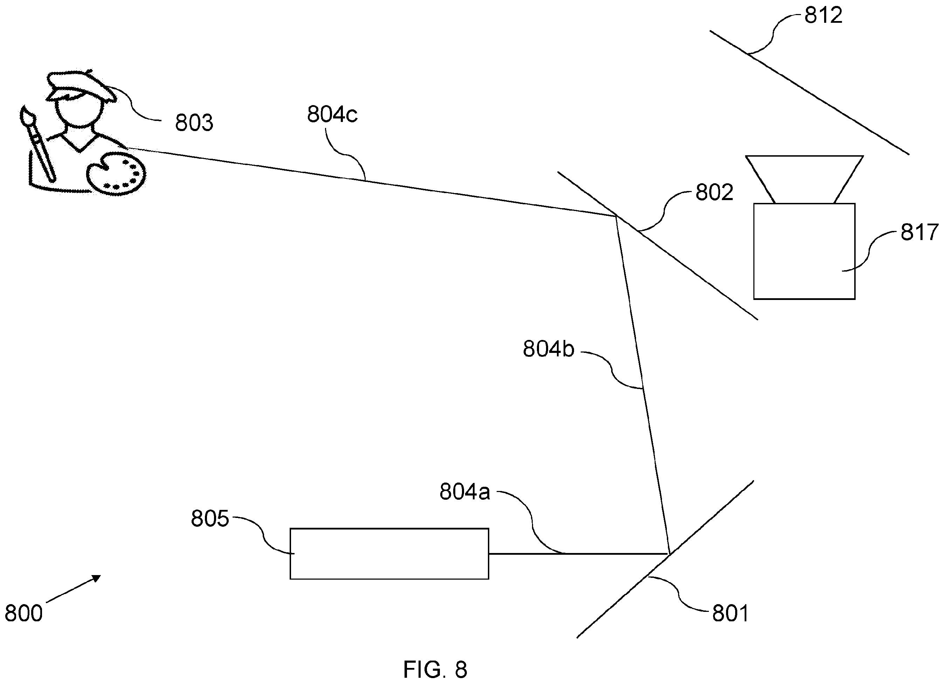

FIG. 8 shows an embodiment of a separate mirror system 800 in accordance with the invention, with an additional imaging mirror 812 and camera 817. The fast mirror 801, the slow mirror 802, the projection 803, the laser beam source module 805 and the laser beam 804a, 804b, 804c it generates are the same (and may operate the same) as the corresponding features 101, 102, 103, 105, 104a, 104b, 104c shown in FIG. 1.

The camera 817 views the scene with an independent imaging mirror 812. The imaging mirror 812 may be the same type of mirror as the slow mirror 802, i.e. slow with a high deflection angle. In this system, the field of view of the camera 817 can be made to match or overlap with the field of view of the slow mirror 802.

Advantageously, the camera 817 of this system 800 has a different baseline than the projected image 803 and can be used to infer 3D position information (e.g. of the image and/or fingers and/or stylus' for gesture detection).

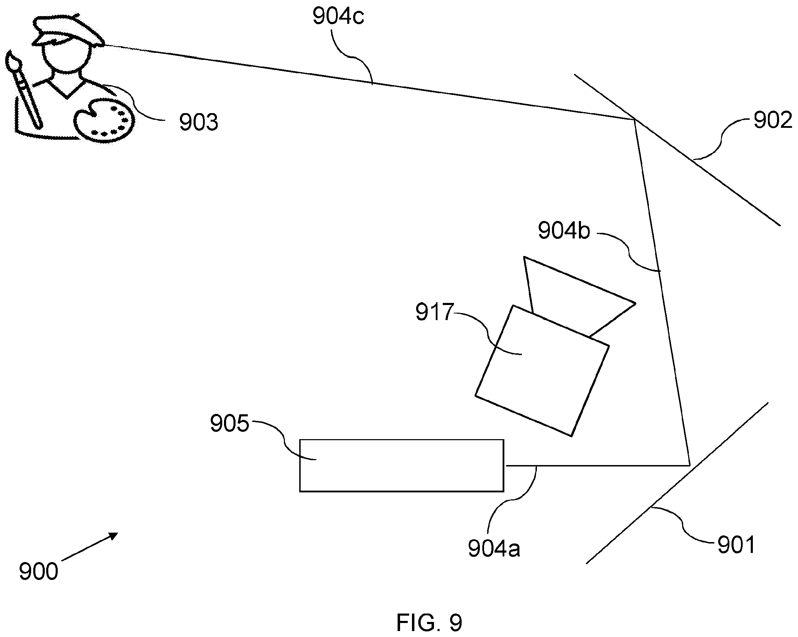

FIG. 9 shows another embodiment of a system 900 in accordance with the invention, with a camera 917 for capturing image data. The fast mirror 901, the slow mirror 902, the projection 903, the laser beam source module 905 and the laser beam 904a, 904b, 904c it generates are the same (and may operate the same) as the corresponding features 101, 102, 103, 105, 104a, 104b, 104c shown in FIG. 1.

However, instead of the camera 917 viewing the scene with an independent imaging mirror 812 as shown in FIG. 8, the camera uses the same slow mirror 902 as the laser beam 904b. Therefore, the field of view of the camera 917 can be made to match or overlap with the field of view of the slow mirror 902. This has the same advantage of only viewing the relevant portion of the zone, that is, the portion that comprises the projection.

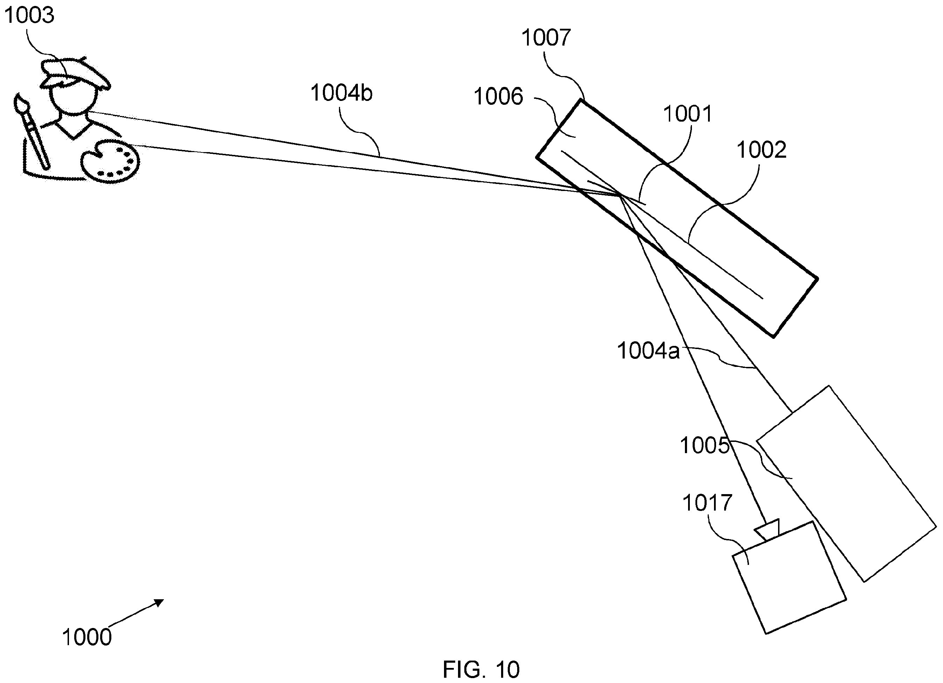

FIG. 10 shows a system 1000 similar to the system 300 of FIG.3 with an additional single pixel optical sensor 1017. The single mirror component 1006 (and the components it comprises 1001, 1002, 1007), the laser beam source module 1005 and the laser beam 1004a, 1004b it generates are the same (and may operate the same) as the corresponding features 306 (301, 302, 307), 305, 304a, 304b shown in FIG. 3.

The single pixel sensor 1017 is positioned, with a field of view comprising the small mirror 1001, so that light from the projected image 1003 can reach the camera 1017 via the small mirror 1001. The single pixel sensor 1017 is offset from the line of sight of the laser 1005 and may be steered by the small mirror 1001 or it may optionally be steered by an independent mirror (e.g. a moveable imaging mirror 812 as shown in FIG. 8). When the optical sensor is a single pixel sensor 1017, it can observe a single pixel of the projected image at a time (or a small area surrounding the pixel) as the moveable imaging mirror (e.g. 1001 or 812) changes the position of the pixel to be captured.

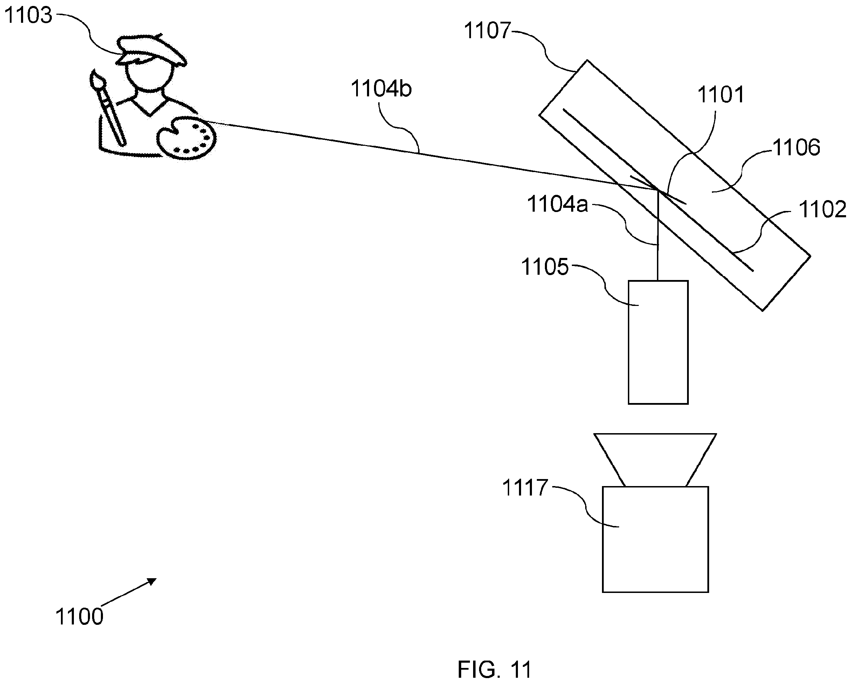

FIG. 11 shows another embodiment of a system 1100 in accordance with the invention, similar to the system 300 of FIG.3, including a camera 1117 having a similar optical path to the laser beam 1104a, 1104b. The single mirror component 1106 (and the components it comprises 1101, 1102, 1107), the laser beam source module 1005 and the laser beam 1004a, 1004b it generates are the same (and may operate the same) as the corresponding features 306 (301, 302, 307), 305, 304a, 304b shown in FIG. 3.

Again, a visible image 1103 is projected by rapid movement of the fast oscillating mirror 1101.

In FIG. 11 the slow actuating device 1102 of the single mirror component 1106 comprises a mirrored surface. Therefore, the single mirror component 1106 comprises a large slow mirror 1102 surrounding or behind a small fast mirror 1101. While the small mirror 1101 is used for projecting the visible image, the camera 1117 may use the slow mirror 1102 to 'see' the visible image 1103. The slow mirror 1102 also determines where the visible image 1103 is projected (because the fast mirror 1101 is mounted to it).

The camera 1117 may be positioned behind the laser source 1105. In such cases, the field of view of the camera 1117 may comprise a 'blind spot' where the laser source partially blocks the view of the camera 1117 and the remaining image seen by the camera 1117 is deflected by the slow mirror 1102. Alternatively, the camera 1117 may be positioned so that the visible beam 1104a from the laser source 1105 and the line of sight of the camera 1117 are not coaxial, but are adjacent (e.g. parallel) before hitting the single mirror component 1106.

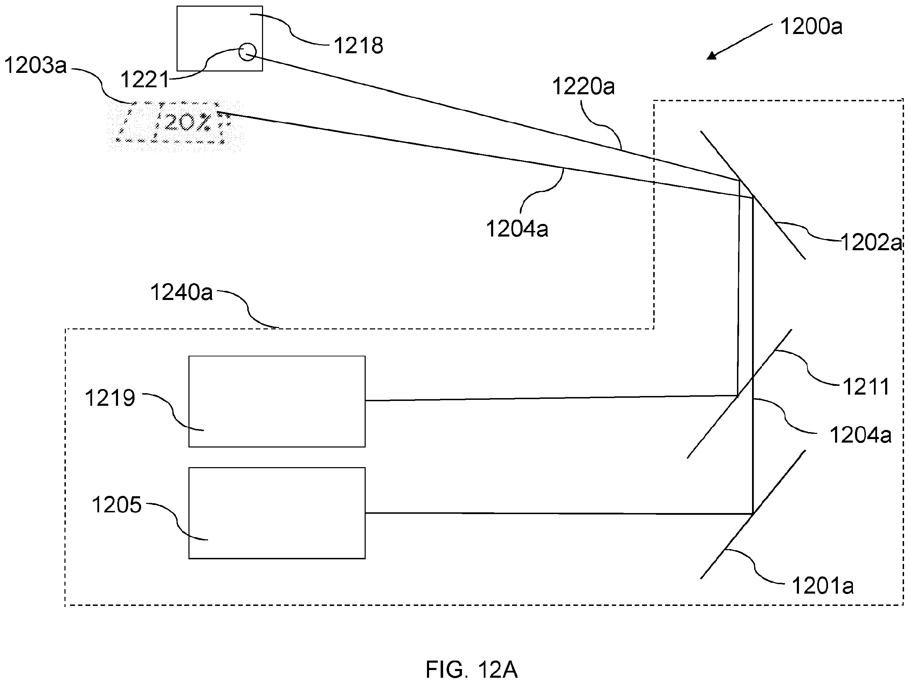

FIGS.12A-C show wireless charging systems embodying the invention. The systems 1200a,b shown in FIGS. 12A-C are capable of charging a variety of different devices wirelessly with a charging laser beam 1220a,b.

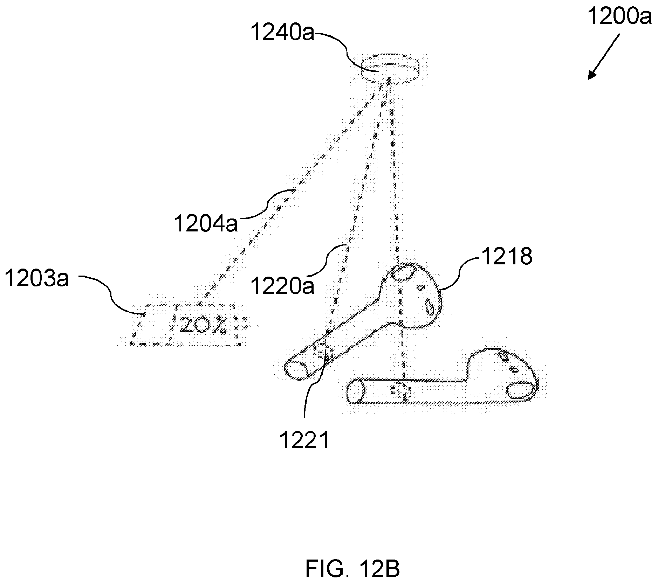

FIGS. 12A and 12B, show a first embodiment of a wireless charging system 1200a embodying the invention.

FIG. 12A shows a device-to-be-charged 1218 having a photovoltaic cell 1221 for receiving optical power from a charging beam 1220a. A supply unit 1240a, which may be mounted to a wall, ceiling or any suitable object in a room, includes a separate visible laser source 1205 and charging laser source 1219, a first fast mirror 1201a, a slow mirror 1202a and a second fast mirror 1211 (i.e. a third actuating device). Here, the charging laser beam 1220a has an infrared wavelength, and could be generated by an off-the-shelf laser diode 1219, e.g. the TO9-15 175 available from SemiNex

The visible laser source 1205 is for generating a visible laser beam 1204a and the charging laser source 1219 is for generating a charging laser beam 1220a. The layout of the mirror system is similar to that shown in FIG.1 (i.e. a fast oscillating mirror 1201a followed by a slow high-deflection mirror 1202a) with the addition of a second fast mirror 1211. The second fast mirror 1211 is positioned in the light path of the visible laser beam 1204a between the first fast mirror 1201a and the slow mirror 1202a. Next to the device is a visible image 1203a, projected by the visible laser 1204a, showing the user information (i.e. a charging status) relating to the wireless charging system 1200a.

Therefore, FIG. 12A shows a second fast mirror (e.g. a third actuating device) arranged to be independent of the first fast mirror 1201a so that the charging laser 1220a may be directed toward the fast mirror from the charging laser source 1219, rather than the charging laser 1220a being directed toward the same fast mirror 1201a. This may allow the charging laser beam 1220a to be scanned independently (e.g. in a different pattern) and gives the system more control over each of the visible and charging laser beams 1204a, 1220a.

The operation of the system 1200a shown in FIG. 12A will now be described.

The visible laser source 1205 and charging laser source 1219 generate a visible laser beam 1204a and a charging laser beam 1220a, respectively. The visible laser beam 1204a is deflected from the first fast oscillating mirror 1201 (to allow scanning for image projection) while the charging laser beam 1220a is deflected from the second fast oscillating mirror 1211. The charging laser beam 1220b is then further deflected by the slow mirror 1202 toward the photovoltaic cell 1221 of the device-to-be-charged 1218. In FIG. 12A the beams 1204, 1220 are shown to be sharing the slow mirror 1202 which is used to aim both the charging beam 1220c and the visible beam 1204c at the same local area. This allows information relating to the wireless charging of the device 1218 to be projected onto or next to the device 1218.

Therefore, the fast and slow actuating devices 1201a, 1202a may be used in a wireless charging system 1200a for wirelessly charging electronic devices in a room, with a visible image 1203a displayed for the user to receive information relating to the operation of the system 1200a. The arrangement of this system 1200a may help each laser source 1205, 1219 to be operated simultaneously.

FIG. 12B shows another view of the same wireless charging system 1200a being used to charge a device 1218 wirelessly while projecting information 1203a to the user.

FIG. 12B shows the supply unit 1240a mounted to the ceiling of a room. When mounted to a surface in this way, the supply unit 1200 can be powered by the mains electrical supply. The visible light beam 1204a is generated from the supply unit 1240a to project a visual image 1203a for the user to observe. In this example, the visible image 1203a appears in the form of a symbol of a partially charged battery with a percentage value representing the current level of charge of the device 1218. In this example, the device-to-be-charged is shown as a pair of wireless earphones 1218.

The supply unit 1240a has the capability to wirelessly charge devices anywhere within a charging zone. The charging zone - i.e. the area in which devices are placed to be charged - may be the whole room. The supply unit 1240a charges the device 1218 by means of a charging beam 1220a. The device 1218 comprises a suitable photovoltaic device 1221 to convert power from the charging beam 1220a into electrical power for charging an on-board battery or otherwise being stored (e.g. in a super capacitor). The charging beam 1220a could also be used directly to power some functioning of the respective device 1218. It is important for the wavelength and power of the beam to be chosen with consideration of eye-safety regulations.

Laser safety standards require the observance of exposure limits to prevent eye injuries. This limit is known as the 'maximum permissible exposure' (MPE) which is a calculated value dependent on inter alia the properties of the laser source that is used. The international standard for laser safety is IEC 60825-1:2014 and equivalently for the US is (ANSI) Z136, and both standards include methods for calculating the MPE. For a charging laser source 1219, the beam 1220a must be safe, but must also transfer enough energy to charge the device 1218 in a reasonable time. Up to 0.5 W certain near-infrared wavelength lasers are considered to be safe. Alternatively, the source 1219 could generate a higher power charging laser (e.g. P > 0.5 W) with a safety interlock switch mechanism which turns off the power when the line of sight to the device is broken, but this is significantly more complex.

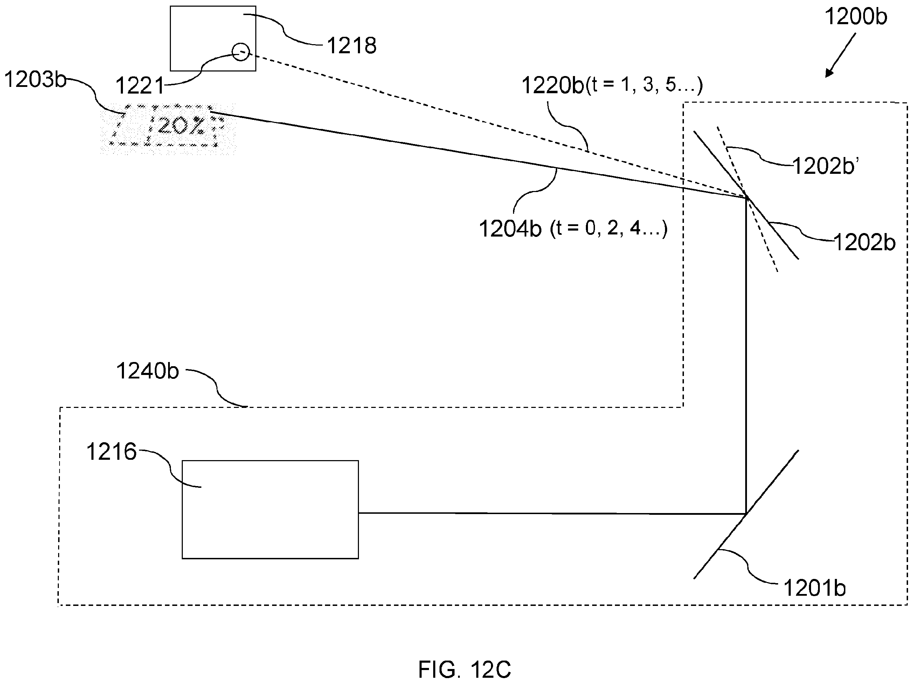

Turning to FIG. 12C, another embodiment of a wireless charging system 1200b according to the invention is shown. This system 1200b is similar to the system 1200a of FIGS. 12A-B. However, in this embodiment the charging laser beam 1220b and visible laser beam 1204b are provided by a single common variable wavelength laser source 1216 and are steered by a common fast mirror 1201b and slow mirror 1202b. The charging laser beam 1220b and visible laser beam 1204b in FIG. 12B are generated according to a time-division scheme. As shown in FIG. 12B, the charging laser 1220b and the visible laser 1204b are operated at alternating times. For example, periodically (e.g. at t= 0,2,4,...etc.) the visible laser 1204b is turned on while the charging laser 1220b is turned off and the slow mirror 1202b directs the beam to the image location 1203b. In between those instances (at times t=1,3,5,... etc.) the charging laser 1220b is turned on and the visible laser 1204b is turned off and the slow mirror 1202b' directs the beam to the PV cell 1221. This allows both the visible laser 1204b and charging laser 1220b to be generated from the same laser source module 1216b, which allows the supply unit to have a more compact design.

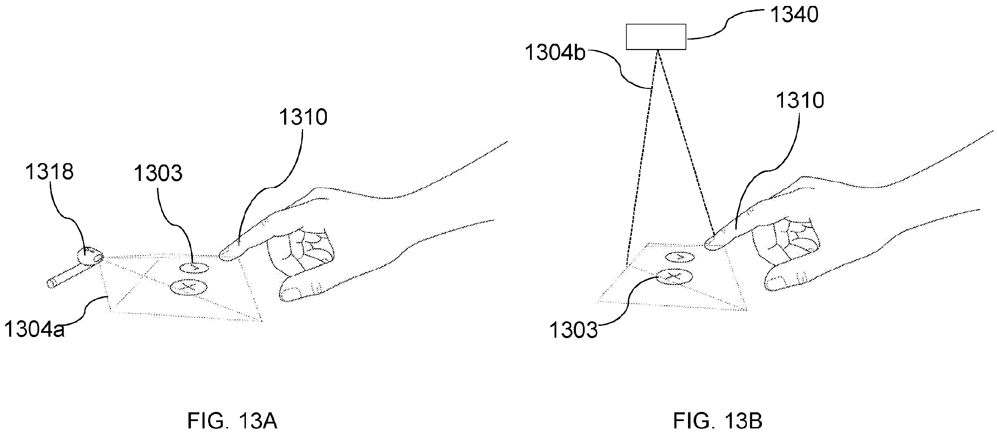

FIGS. 13A and 13B show how some embodiments of the invention may be used to display options for gesture detection.

In both FIGS. 13A and 13B a visible image comprising an option menu 1303 is displayed by the system. A finger 1310 of a user is illustrated to be selecting an option.

In FIG. 13A, the visible image, i.e. the option menu 1303a, is projected by a wearable device 1318 which, in this case, is a pair of ear phones 1318. The wearable device 1318 comprises a system (e.g. 100, 200, 300 etc.) in accordance with an embodiment of the invention. The menu 1303a may present the user with options to enable the user to control the operation of the wearable device 1318. The wearable device 1318 may also be wirelessly charged by an additional supply unit, similar to that shown in FIGS. 12A-C.

In FIG. 13B the visible image 1303b is projected by a supply unit 1340b comprising the system according to an embodiment of the invention (e.g. 100, 200, 300 etc.).

Any of the mirror systems 200-1200 shown in FIGS. 1-12C may be suitable for use in this system. The detailed operation of such systems has already been described above. In both cases, the visible beam 1304a,b is projected onto a surface to display the option menu 1303a,b, e.g. by scanning in a raster or vector pattern, by rapid movement of the fast mirror (e.g. 101, 201.. etc.) in a location determined by the slow mirror e.g. 102, 202.. etc.).

In both cases, the menu 1303a,b presents the user with two options, a tick and a cross, which may enable the user to control the operation of the system. The system 1300a,b may comprise a sensor for detecting the selection made by the user (e.g. the user's finger), such a sensor could be e.g. acoustic or optical.

The user may select one or more of the options 1303a,b by hovering their finger 1310 over the preferred option and breaking the beam 1304a,b that projects the image 1303a,b. This may be detected by a sensor e.g. an optical sensor in the form of a camera (e.g. see mirror systems 500 to 1100 of FIGS. 5 to 11 for how to implement an optical sensor), which may be included in the wearable device 1318 or the supply unit 1340.

Equally, the user may select one or more of the options in the image 1303a,b by speaking the preferred option e.g. by reading out the options "yes" or "no". If the system has such a voice control feature, then the spoken command may be detected by a microphone on the wearable device 1318 or on the supply unit 1340. The wearable device 1318 or supply unit 1340 may be configured to detect the spoken selected options, recognise the command and carry out an associated instruction. The subsequently communicate instructions to the supply unit 1340 via a wireless communication channel, e.g. Bluetooth^{™}.

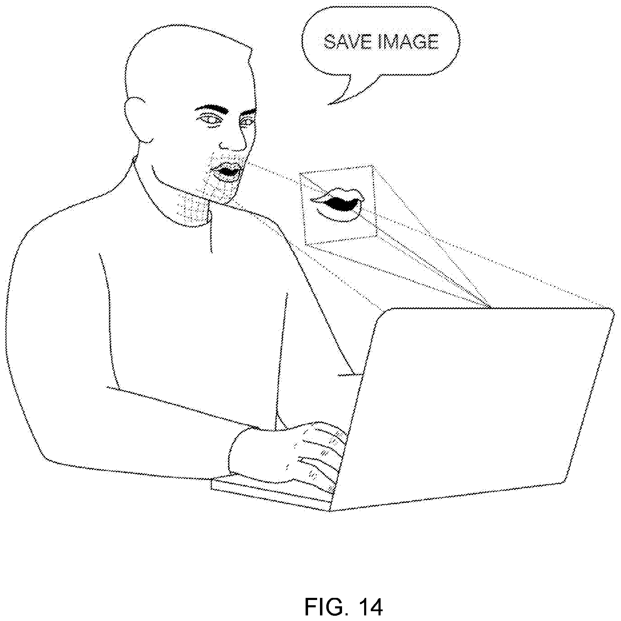

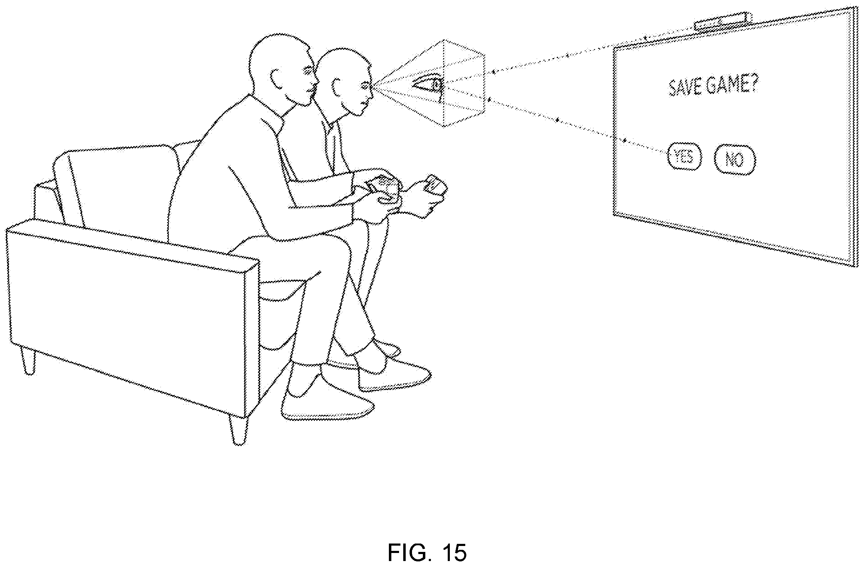

Although wireless charging systems have been disclosed as a useful application of the invention, the Applicant envisages that other applications could benefit from the improved projection and optical sensing provided by embodiments of the invention. For example, FIG. 14 shows a schematic of robust voice recognition where an optical sensor (e.g. a camera) may be used to optically detect vibrations of the user's face and neck to determine speech (e.g. using techniques known in the art). Another example is shown in FIG. 15, where real-time eye tracking is used to select from an option menu, e.g. for use in a video game. Both of these applications shown in FIGS. 14 and 15 may make use of the feedback loop shown in FIG. 6.

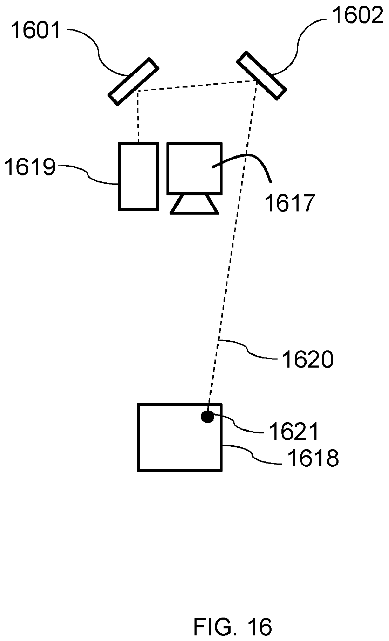

FIG. 16 shows a schematic view of a wireless charging system, e.g. for tracking a moving device to be charged. The wireless charging system comprises a charging laser source 1619, a fast mirror 1601, a slow mirror 1602 and an optical sensor (e.g. a camera) 1617. These components may be in a supply unit (as shown in FIGS. 12A-C) in a common housing or they may be separated (e.g. into separate units, e.g. a hub unit and a relay unit). FIG. 16 also shows a device to be charged 1618 comprising a photovoltaic cell 1621 for receiving optical power.

The laser source 1619 generates a charging laser beam 1620 which is directed by the fast mirror 1601 to the slow mirror 1602 which in turn directs the laser beam 1620 to the photovoltaic cell 1621 of the device to be charged 1618.

The charging beam has a direction determined by movement of the fast mirror 1601 and movement of the slow mirror 1602.

The camera 1617 has a field of view which includes the device to be charged 1618. Therefore, the system uses image capture and/or video capture to help the system to track the position of the device to be charged 1618. The device to be charged 1618 may comprise a fiducial marker to help the camera (and processing module (e.g. see 608 of FIG. 6) identify the device).

The device to be charged may be static or moveable.

In another embodiment, where the optical sensor 1617 is directed at the slow mirror as is shown in the arrangements of FIGS. 7 - 9, the field of view of the camera may be moved to track the device to be charged (DTC). This could be useful for example where the device is a pair of wireless earbuds on a table which can be moved by a user.

In such a system, it may be expected that the device to be charged 1618 is intermittently in motion. The system may be arranged as shown in any of FIGS. 7 - 9 and use a feedback loop similar to that of FIG. 6 to track the movement of the device 1618 to maintain charging - i.e. to maximise the amount of time that the charging beam 1620 is incident on the photovoltaic cell 1621.

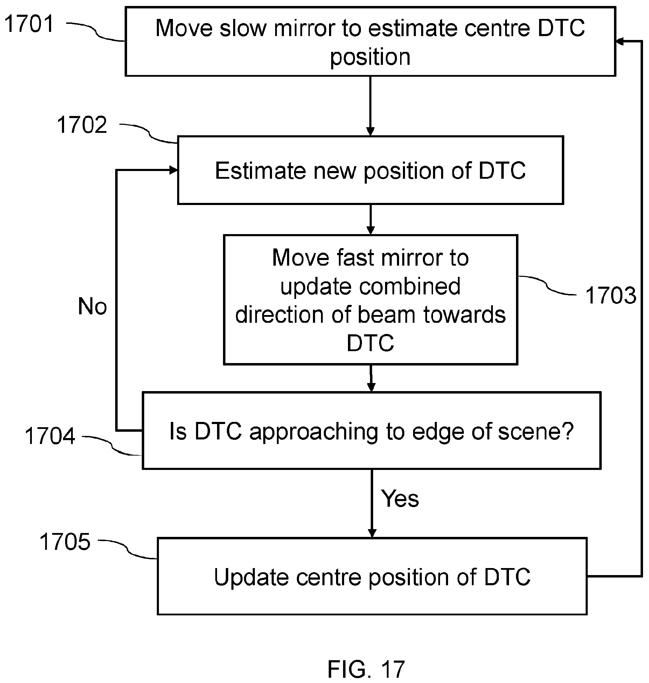

FIG. 17 is a flowchart of a process used for such a scenario. The flowchart explains how the wireless charging system may follow the device to be charged (DTC) with the charging laser.

The camera views the scene with a field of view comprising the DTC. At step 1701 the slow mirror is moved to determine the location of the projection centre of the charging beam (e.g. based on the image captured by the camera).

In step 1702, the system estimates a new position of the device to be charged (e.g. from the captured image). Then at step 1703, the quasi-static fast mirror moves to finely adjust the direction of the charging beam toward the photovoltaic cell of the device to be charged based on the new estimate of the device's position.

At step 1704 the system determines whether the device to be charged has moved towards the edge of the field of view of the camera. Then at step 1705 a new position of the DTC is determined which determines a new projection centre of the charging beam (i.e. so that it is overlapping with the photovoltaic cell of the device to be charged). At step 1701 the slow mirror is moved to centre the projection of the charging beam on this new projection centre. As the camera is also directed to the slow mirror, the field of view moves so that the device to be charged is in the centre. If at step 1704 the system does not determine that the device to be charged has moved towards the edge of the field of view of the camera, the process goes back to step 1702. The steps 1701 to 1705 repeat in a loop while the charging and tracking process is in operation.

Therefore, the wireless charging system may track and charge a device in motion.

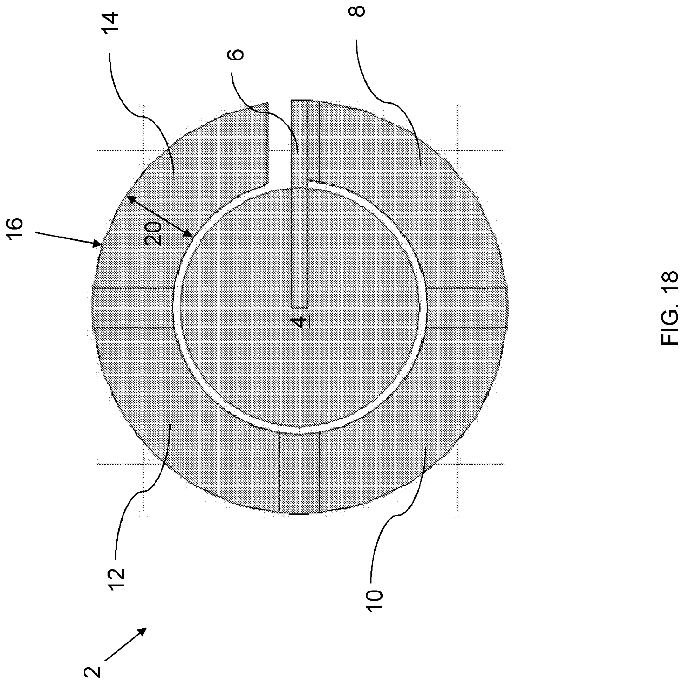

FIG. 18 shows a more detailed plan view of an embodiment of the second actuating device. In this example, the actuating device 2 is used as a moveable micromirror (e.g. the slow mirror 102). The actuating device 2 has a single actuator arm 16 connected by a connecting beam 6 to a central moveable element 4 (i.e. comprising the second reflecting moveable surface). The actuator arm 16, moveable element 4 and connecting beam 6 are made primarily from silicon. The actuator arm 16 has four approximately equal-sized independently addressable segments 8, 10, 12, 14 where an additional layer of piezoelectric material - e.g. lead zirconate titanate (PZT) is provided. Each piezoelectric segment is connected to a respective control output of a corresponding control system (not shown).

The moveable element 4 has a reflective coating on top which provides the mirror element - i.e. for deflecting incident light to a desired position. The diameter of the mirror element is approximately 3 mm.

The width 20 of the actuator arm 16 is approximately one hundred times greater than its thickness (thickness being the dimension normal to the viewing plane). It thus has the form of a thin piezoelectric membrane in contrast for example to known piezoelectric torsion bars which are typically wire-like.

In this example, the overall size of the actuating device 2 is approximately 9 mm X 9 mm. The C-shaped actuator arm 16 can be seen to curve closely around the moveable element 4 (i.e. the arm is as close as possible to the centre). This allows the moveable mirror to be as compact as possible, thus reducing the amount of space taken up by the device. This may be useful especially for inclusion in miniature devices - e.g. small wearables - where available space for additional components is scarce. However the design also allows the arm to be relatively long and thus to accumulate a significant degree of deflection along its length, despite being relatively stiff as a result of its significant width. Moreover the width of the arm allows for a wide junction region between the arm 16 and the central moveable element 4, thereby avoiding the thin weak spots prevalent in existing micro-mirror designs.

As can be seen in the one-armed micro-mirror described above, the moveable mirror element 4 is 'hanging' on one actuator arm which takes the form of a C-shaped piezoelectric membrane torsion beam. This torsion beam has the function of both providing lift and torsion upon actuation of pairs of the four segments 8, 10, 12, 14 so that by simply actuating two neighbouring segments, deflection in all four tilting directions is possible. Using only a single cantilever (actuator arm) with four independently actuable segments provides a micro-mirror which can rotate significantly without any weak spots. This provides a very robust device which can withstand deformation without breaking easily. The thin, membrane-form actuator arm enables significant torsion and allows the micro-mirror to rotate despite being wide and relatively stiff - this is because, over the length of the actuator arm, it can accumulate enough torsion. Looked at another way torsion resulting from the deformation of the piezoelectric membrane formed by the arm is 'spread along' the actuator arm 16 away from the anchored part of the arm, resulting in a large deflection without compromising the robustness of the device.

The second actuating device 2 is implemented in these examples as a moveable mirror for non-resonant operation (e.g. for beam-steering). When a light beam is incident on the central mirror element 4, it can be reflected in a desired direction determined by the position and orientation of the moveable element 4 which is determined by which of the actuator segments are actuated.

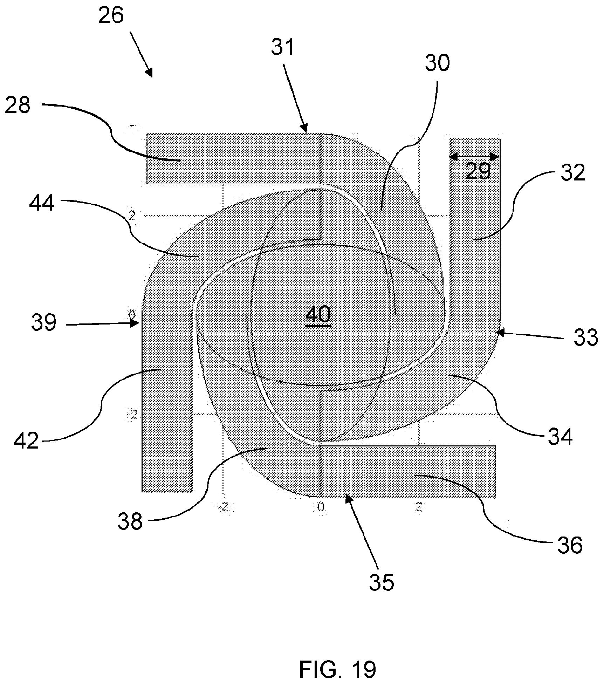

FIG. 19 shows another embodiment of the second actuating device 26. This variant has four actuator arms 31, 33, 35, 39 each having a width 29 two orders of magnitude greater than their thickness. The actuator arms 31, 33, 35, 39 are arranged in a spiral surrounding the central moveable element 40 which also has an optically reflective surface to make it a mirror element.

Each of the four actuator arms (e.g. 31) has two segments (e.g. 28, 30) and there are therefore eight segments 28, 30, 32, 34, 36, 38, 42, 44 in total. Similarly to the first example, each segment 28, 30, 32, 34, 36, 38, 42, 44 is independently addressable by selectively applying a suitable voltage thereto. The four innermost segments 30, 34, 38, 44 of the actuator arms 31, 33, 35, 39 have a curved ribbon shape. The four outermost segments 28, 32, 36, 42 have a straight ribbon shape. The shape of the moveable element 40 comprises two overlapping ellipses disposed perpendicularly to each other, having a common centre. Each nonoverlapping portion of the moveable element 40 comprises a connection to one of the actuator arms 31, 33, 35, 39.

As with the first embodiment, the arms 31, 33, 35, 39 are relatively long and thus to accumulate a significant degree of deflection along their length, despite being relatively stiff as a result of its significant width. Moreover the width of the arms give robust junction regions between them and the central moveable element 40.

Similarly to the previous embodiment, a mass (not shown) is disposed below the moveable element 40. This helps to prevent the moveable element 40 from deforming upon actuation of one or more of the actuator arms 31, 33, 35, 39 by increasing the stiffness of the moveable element 40. The mass 46 has a circular cross section, approximately coinciding with the overlapping portion of the two perpendicular ellipses. As before, the actuator arms 31, 33, 35, 39 are much thinner than their width by a factor of approximately one hundred.

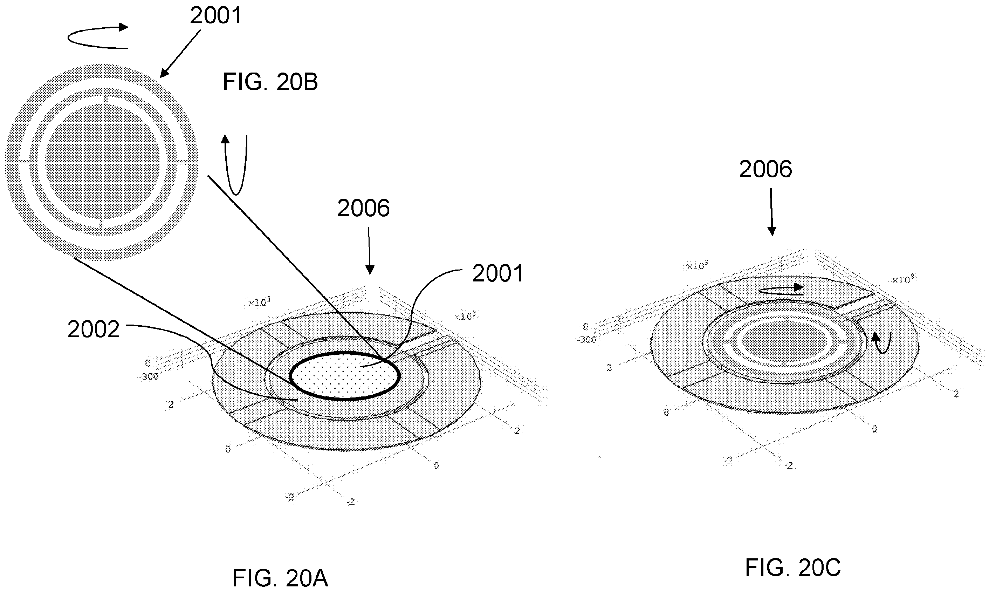

FIGS. 20A-C show a more detailed view of a single mirror component 2006 with a fast actuating device 2001 mounted on at slow actuating device 2002. The single general purpose component 2006 (also indicated schematically in FIGS. 3, 4, 10 and 11) thus combines the first actuating device 2001 and the second actuating device 2002 into a single component.

As will be seen, the actuating arrangement for the slow mirror 2002 is similar to that described in FIG. 18, it can be seen that the fast mirror 2001 is centrally located within the moveable element 2002. An enlarged depiction of the fast mirror 2001 is shown in Fig. 20B which shows the structure of the fast mirror 2001 and curved arrows show that the central fast mirror 2001 can move about two axes. The slow mirror 2002 can also move about at least two axes. FIG. 20C shows the single mirror component of FIG. 20A, with the detailed structure of the small mirror shown in situ.

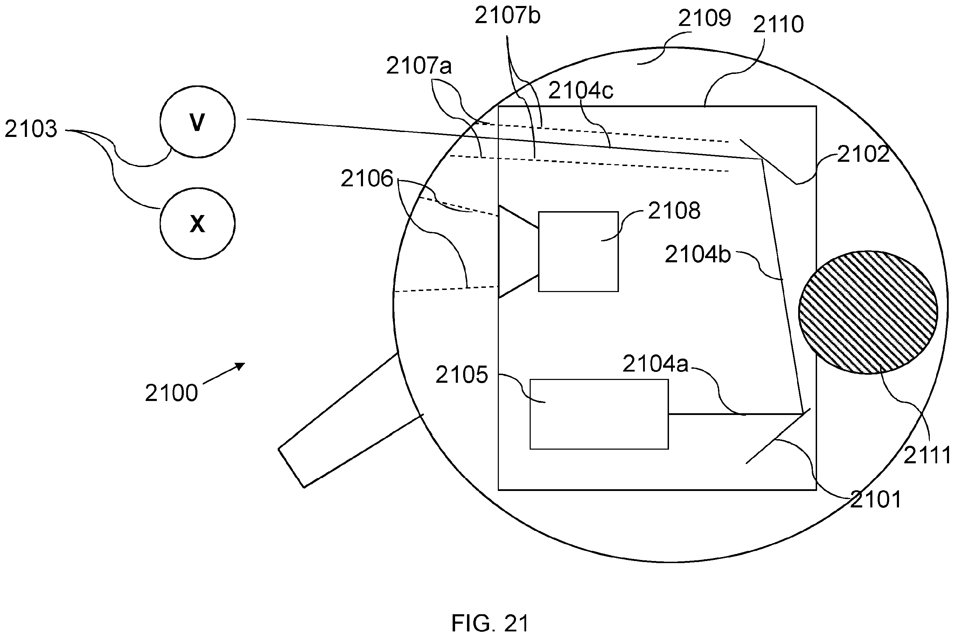

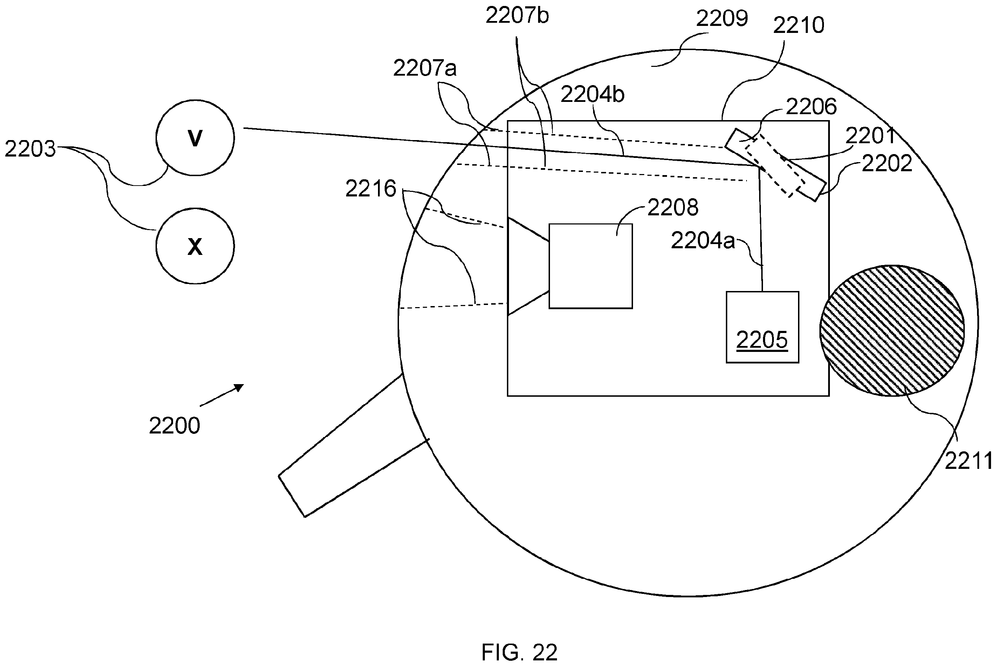

FIGS. 21 and 22 show the system of FIG. 13A in more detail.

FIG. 21 is a schematic view of an embodiment of the invention where the system 2100 is arranged to be compact enough for being embedded within a wearable device. In this example, the wearable device is an earbud 2109 comprising a projector package 2110 and a speaker element 2111. The projector package 2110 comprises a fast mirror 2101, a slow mirror 2102 (both as previously described), an optical sensor (camera) 2108 and a visible laser source 2105. The optical sensor 2108 may be, for example, a typical 2D camera, a monochrome and/or low power camera or a time of flight sensor. There is an opening 2107a in the projector package 2110 and an opening 2107a in the earbud 2109 to allow the visible laser beam to be transmitted out of the earbud 2009. There is also an opening 2116 to allow the camera 2108 to see the scene.

The example compact arrangement shown in FIG. 21 has the following dimensions: the distance between the fast mirror 2101 and the and slow mirror 2102 is less than 1cm, the distance between the fast mirror 2101 and the camera 2108 is less than 1cm, and the distance between slow mirror 2102 and the camera 2108 is less than 1 cm.

The projection works as laid out in previous embodiments (see, for example, the description of projection using the separate mirrors 101, 102 of FIG. 1). The visible beam 2104a,b,c is projected from the laser source 2105. The ear bud 2109 visibly projects an option menu 2103 to the user, e.g. for them to select with a gesture (as shown in FIG. 13A). The camera 2108 is arranged to view the scene and detect a user selecting one of the options (e.g. with a gesture). The camera 2108 may also be able to detect a skewed image and correct the projection.

FIG. 22 is a schematic view of another embodiment similar to that of FIG. 21 using a single mirror component 2206 in place of the separate fast and slow mirrors shown in FIG. 21. The reference numerals of FIG. 22 correspond to the features shown in FIG. 21 with appropriate changes to the prefix (e.g. laser source 2105 is the same as laser source 2205 etc.). The embodiment shown in FIG. 22 is advantageously more compact. The projection works as laid out in previous embodiments (see, for example, the description of projection using the single mirror component system of FIG. 3). However, the dimensions for this system 2200 are as follows: the distance between the camera and the single mirror component 2206 is less than 1cm and the distance between the laser source 2205 and the single mirror component 2206 is less than 1cm.

As discussed above, the central moveable element (e.g. 4 or 40) can be stiffened, for example, by having a large mass (not shown) disposed below the moveable element. Increased stiffness prevents the moveable element from deforming upon actuation of the surrounding actuator arms. However, the applicant has envisioned scenarios in which it is desirable for the central moveable element to be deformable.

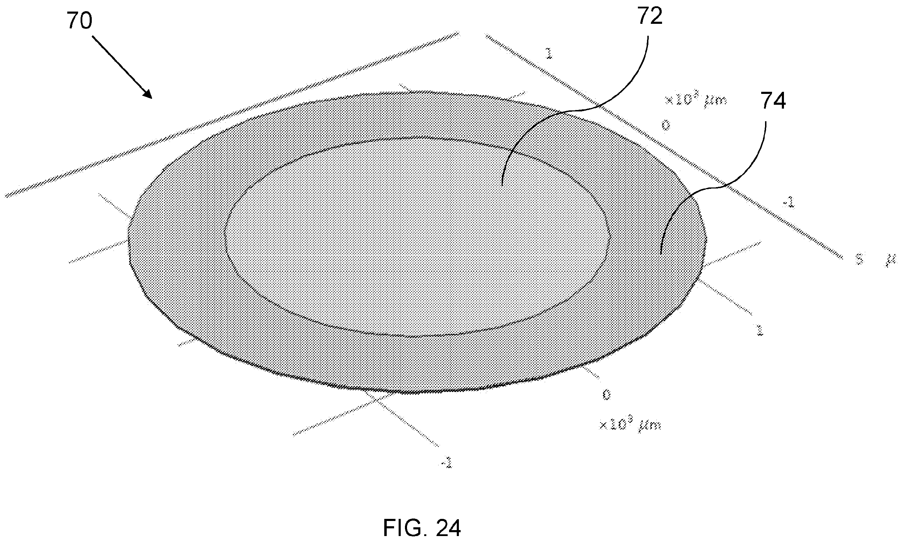

FIG. 23 shows a plan view of a deformable element 70, which is a variant of the central moveable element 4, 40 shown in the foregoing embodiments. The deformable element 70 has an overall diameter of approximately 3 mm. The deformable element 70 of FIG. 23 has two independently actuable sections. The first section 72 is a central circular section and the second section 74 has the shape of an annulus arranged concentrically around the central circular section 72. The first section has a diameter of approximately 2 mm. Although only two sections are shown, there may be more concentrically arranged sections (e.g. further annuli) surrounding the central section. FIG. 24 shows a perspective view of the deformable element 70.

A voltage can be applied independently to each section 72, 74 of the deformable element 70 using a control system (not shown). The deformable element 70 may be used as the central moveable surface in any actuating device embodying the invention, to provide focussing and de-focussing capability.

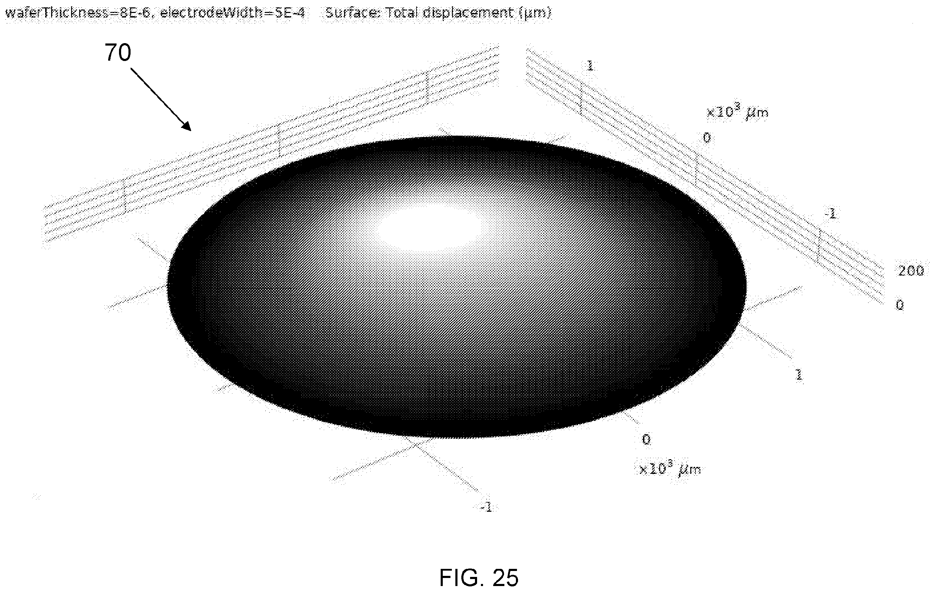

FIG. 25 is a perspective view showing the deformable element of FIG. 24 upon actuation. The shading in FIG. 25 illustrates the variation in vertical displacement, i.e. lift (in the z direction), of the surface. Minimal vertical displacement is shown in black and maximal vertical displacement is shown in white. Intermediate vertical displacements are represented by shades of grey. In contrast to the stiff central moveable elements (e.g. 4, 40) described above, which are attached to a large mass, the deformable element 70 is relatively thin and has the same thickness as the actuator arms. This thin deformable central element makes the entire actuating device thinner (e.g. having a thickness of between 10-100 µm) and may reduce the space required by such a device. The deformable central element having the same thickness as the actuator arms may also reduce the complexity of manufacturing the actuating device and therefore may lower manufacturing costs. Furthermore, the ability to focus and defocus light may remove the need for focussing optics, thus reducing the overall size of the device.

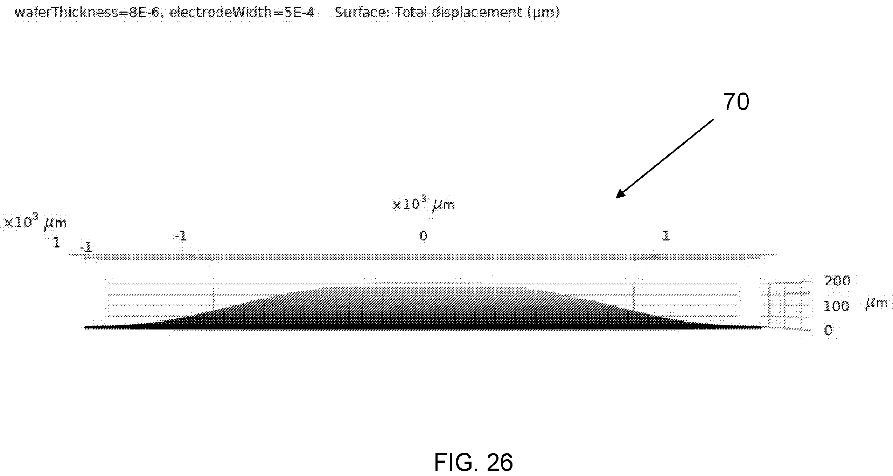

FIG. 26 is a side view of the actuated deformable element shown in FIG. 25. The deformable element 70, comprises a curved surface with minimal vertical displacement around the perimeter of the deformable element 70 and maximal vertical displacement at the centre of the deformable element 70. FIG. 26 shows that the vertical displacement of the deformable element can reach 200 µm for a diameter of between 2-3 mm.

The deformable element of FIGS. 23-26 is also optically reflective. This provides a deformable mirror element in the centre of the actuating device which can give the actuating device the ability to focus and defocus incident light.

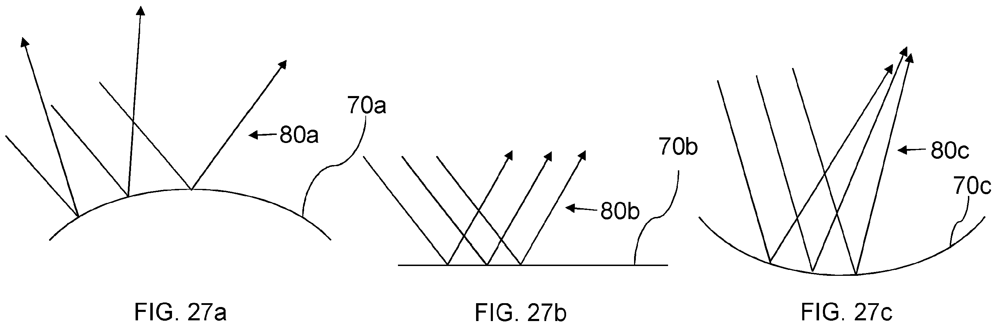

FIGS. 27 (a)-(c) shows how the changing curvature of an optically reflective central moveable element changes the way light is deflected by the actuating device. When the deformable element 70 has an optically reflective surface, it can act as a focussing or defocussing mirror, depending on how it is deformed.

As illustrated in FIGS. 25-26 the first section 72 and second section 74 may be actuated with a different voltage to cause at least part of the surface of the deformable element 70 to be displaced in the z direction. Applying a voltage to just the central section 72 of the deformable element 70 may result in a concave deformation of the deformable element 70. Applying a voltage to just the outer ring section 74 of the deformable element 70 may result in the opposite convex deformation. Having the deformable element 70, segmented in this way, may allow deformation of the deformable element 70 in both directions, upwards and downwards (e.g. in a convex or concave manner). In this example, a voltage is applied to only one of the sections and the centre of the deformable element is lifted the most from its rest position. This gives the deformable element the curved profile shown in FIG. 26. If a light source is arranged to illuminate the uppermost surface of the deformable element 70 shown in FIGS. 25-26, then the light from the light source will be incident on the convex surface of the deformable element. If that same surface is optically reflective, e.g. having a mirrored coating, then the light will be reflected with a divergence angle depending on the curvature of the deformable element 70.

A schematic version of a convex deformable element 70a is shown in FIG. 27a. The convex optically reflective surface causes the divergence angle of the reflected light 80a to be greater than the divergence angle of the incident light and thus the incoming light is de-focussed. A schematic version of a planar deformable element 70b is shown in FIG. 27b. The planar optically reflective surface causes the divergence angle of the reflected light 80b to be the same as the divergence angle of the incident light and so the surface provides specular reflection. A schematic version of a concave deformable element 70c is shown in FIG. 27c. The concave optically reflective surface causes the divergence angle of the reflected light 80c to be less than the divergence angle of the incident light and to the incoming light is focussed.

The applicant has realised that there are a number of ways that the benefits provided by the systems described above can be exploited.

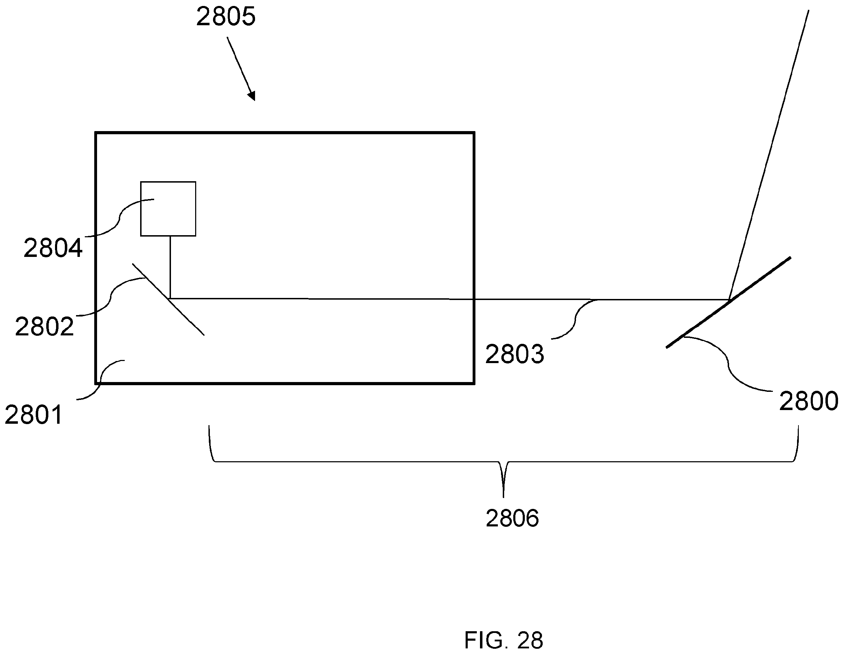

One example of a generic system that benefits from incorporating the first and second actuating devices is a projector system 2805, shown schematically in FIG. 28. FIG. 28 shows a projector unit 2806 comprising an actuating device 2800 - e.g. according to one of the second actuating devices described above. The projector unit 2806 comprises a projector 2801 and the second actuating device 2800. The projector 2801 pairs a light source - in this case, a laser beam source 2804 - with a fast moving mirror 2802 such as a resonant oscillating mirror- e.g. according to one of the first actuating devices described above. Alternatively, the projector 2801 may be replaced by a laser source and the second actuating device 2800 may be replaced by a composite mirror component of the type shown in FIGS. 3, 4, 10, 11 and 20A-C.

In alternative embodiments, the projector unit 2806 could be an imaging unit and the laser beam source 2804 could be replaced with a camera to provide an imaging system. Such an imaging system could be used for gesture detection. In some other examples, the laser beam source 2804 may be used alongside a camera enabling both projection and image capture. As described with reference to FIGS. 5 to 11 the camera and laser beam source 2804 may use common actuating devices (if they want to 'see' and project around the same area) or use separate actuating devices. In such dual-purpose systems, a person may interact with the projected light, e.g. via gestures, or the visible light projected may be adjusted based on what could be seen in the camera.

The projector 2801 and actuating device 2800 of the projector unit 2806 may be located within a common housing. Equally, they may be separate, in separate housings.

The central moveable element of the actuating device 2800 has an optically reflecting surface to allow it to function as a moveable mirror 2800.

Although this projector system 2805 could be used with any particular wavelength of light, in FIG. 28 the projector 2801 is arranged to output visible light 2803 to be projected by the projector system 2805 and the moveable mirror 2800 is arranged to reflect visible light 2803 to direct it to a target.

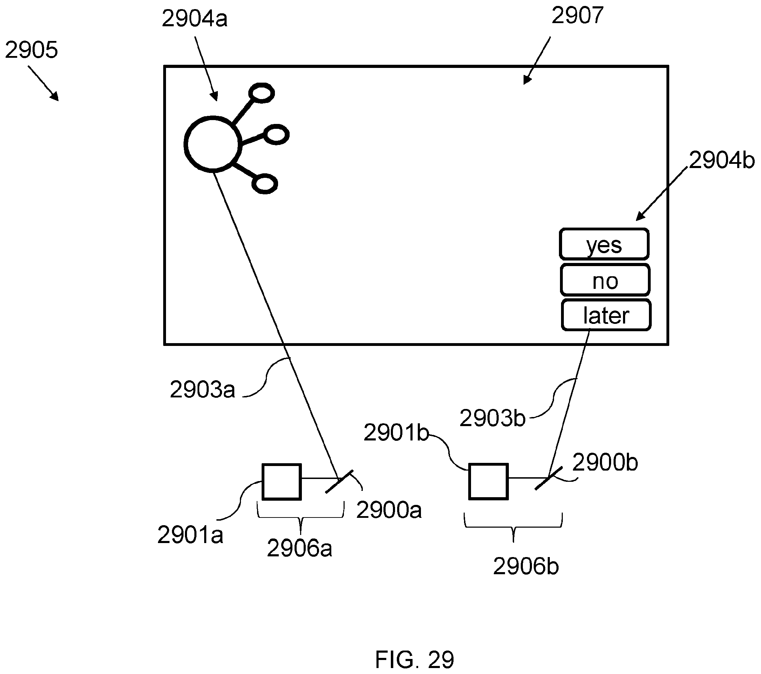

FIG. 29 shows a first example of a projector system employing the principle shown in FIG. 28. In this example projector system 2905 there are two projector units 2906a, 2906b. The projector units 2906a, 2906b are similar to the projector unit 2806 shown in FIG. 28, however, in FIG. 29 the mirror 2802 and the light source 2804 have been omitted for clarity. The projector units 2906a and 2906b are arranged to project an image onto a surface 2907. The projected images 2904a and 2904b together represent a total user interface. The user interface may be projected onto a table and may receive user input via gestures or voice recognition. For example, in FIG. 29 an image of an option menu 2904b is projected by one of the projector units 2906b providing options (yes, no, later) for the user to select with gestures or voice or by another mechanism. Using the high deflection actuating devices 2900a, 2900b, the resolution is not uniform over whole area 2907 but instead, high resolution is provided only where it needs to be, i.e. in the areas where each image is projected 2904a, 2904b.

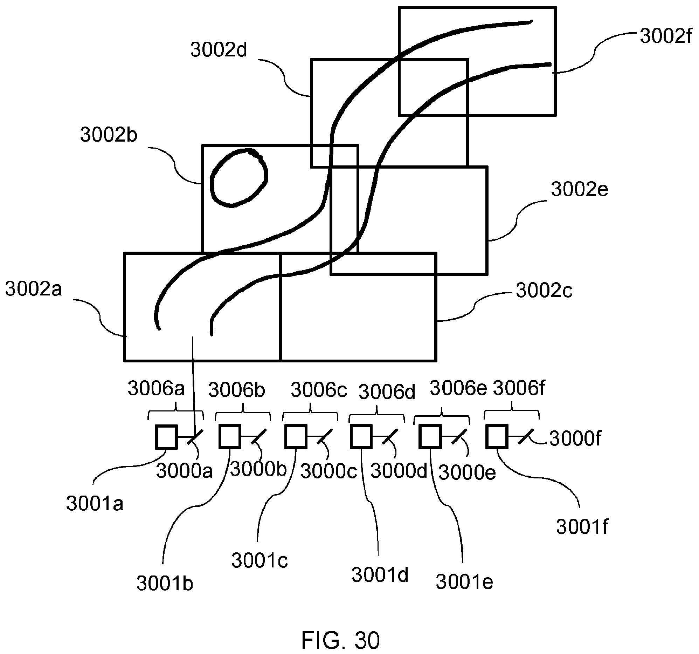

FIG. 30 shows a second example of a projector system. An illustration of a scene showing a meandering river is displayed (e.g. on a wall) by combining multiple projector units 3006a,...3006n (each comprising a projector 3001a, ... 3001n and a second actuating device 3000a,...3000n) each displaying a scene component 3002a,... 3002n. The projector units 3006a,...3006n are similar to the projector unit 2806 shown in FIG. 28, however, in FIG. 30 the mirror and the light source have been omitted for clarity. The first projector unit 3006a projects the first scene component 3002a, the second projector unit 3006b projects the second scene component 3002b and so on. The projection works and is most suitable when there is not full or dense information to be displayed all over the surface - i.e. when it is not necessary to render the image everywhere in the field of view at the same time. In these situations, power and cost can be saved by using an array of smaller components to generate a rich, high resolution image that has blank or unused areas.

It will be appreciated by those skilled in the art that the invention has been illustrated by describing one or more specific embodiments thereof, but is not limited to these embodiments; many variations and modifications are possible, within the scope of the accompanying claims.

## Claims

1. A system (100; 200; 300; 400; 500; 600; 700; 800; 900; 1000; 1100; 1200; 2100; 2200; 2905) for deflecting a laser beam (104; 204; 304; 404; 504; 604; 704; 804; 904; 1004; 1104; 1204, 1220; 1304; 1620; 2104; 2204; 2903) into a zone, comprising:
a first actuating device (101; 201; 301; 401; 501; 601; 701; 801; 901; 1001; 1101; 1201; 1601; 2101; 2802) comprising a first reflecting moveable surface arranged to tilt about two or more axes so as to deflect the laser beam to define a projection area about a projection centre;
a second actuating device (102; 202; 302; 402; 502; 602; 702; 802; 902; 1002; 1102; 1202; 1602; 2102; 2800; 2900; 3000) arranged to tilt and direct the laser beam so as to determine a location of the projection centre in the zone;
wherein the first actuating device is able to move faster than the second actuating device; **characterised in that**
the first reflecting moveable surface is a deformable moveable surface which can change shape on actuation.

2. The system of claim 1, wherein the second actuating device comprises a second reflecting moveable surface.

3. A system (100; 200; 300; 400; 500; 600; 700; 800; 900; 1000; 1100; 1200; 2100; 2200; 2905) for deflecting a laser beam (104; 204; 304; 404; 504; 604; 704; 804; 904; 1004; 1104; 1204, 1220; 1304; 1620; 2104; 2204; 2903) into a zone, comprising:
a first actuating device (101; 201; 301; 401; 501; 601; 701; 801; 901; 1001; 1101; 1201; 1601; 2101; 2802) comprising a first reflecting moveable surface arranged to tilt about two or more axes so as to deflect the laser beam to define a projection area about a projection centre;
a second actuating device (102; 202; 302; 402; 502; 602; 702; 802; 902; 1002; 1102; 1202; 1602; 2102; 2800; 2900; 3000) arranged to tilt and direct the laser beam so as to determine a location of the projection centre in the zone;
wherein the first actuating device is able to move faster than the second actuating device;
wherein the second actuating device comprises a second reflecting moveable surface;
**characterised in that** the second reflecting moveable surface is a deformable moveable surface which can change shape on actuation.

4. The system of any of claims 1 to 3, wherein the first actuating device is arranged to direct an incident laser beam to the second actuating device.

5. The system of any of claims 1 to 4, wherein the first actuating device is mounted to the second actuating device so that movement of the second actuating device causes movement of the first actuating device independently of movement of the first reflecting moveable surface.

6. The system of any preceding claim, wherein the first actuating device is arranged to operate in a resonant mode, the resonant mode comprising oscillating the first reflecting moveable surface about said one or more axes.

7. The system of any preceding claim, wherein the second actuating device is arranged to tilt about two or more axes and have a greater range of motion, about at least one of said axes, than the first actuating device.

8. The system of any of claim 3, wherein the first reflecting moveable surface is a deformable moveable element which can change shape on actuation.

9. The system of any preceding claim, wherein the second actuating device comprises:
at least one actuator arm (16) comprising a piezoelectric membrane and
having a width at least ten times its thickness; and
a moveable element (4), connected to the actuator arm, such that actuation of the actuator arm causes movement of the moveable element.

10. A projection system comprising:
a visible laser source for generating a visible laser beam and
a system for deflecting the laser beam into a zone according to any preceding claim;
wherein the projection system is arranged to generate a visible image in the zone using the visible laser beam.

11. The system of any preceding claim, wherein the system comprises an optical sensor (617, 1017, 1617, 2108) arranged to capture image data of at least part of the projection area, optionally wherein the optical sensor is aligned with an optical path of the laser beam, further optionally wherein the optical sensor comprises fewer than 1000 pixels.

12. The system of claim 11, wherein the second actuating device comprises a or the second reflecting moveable surface arranged to deflect light from the projection area to the optical sensor such that the optical sensor can image at least part of the projection area.

13. The system of any preceding claim, wherein the system is arranged to generate the visible image by scanning said visible laser beam; the scanning comprising:
moving the first reflecting moveable surface to carry out a scan;
wherein said scan follows a scanning path comprising one or more scan lines, each scan line comprising a plurality of points, each point representing a pixel of the visible image; and
wherein the visible laser source is configured to determine which of the plurality of pixels is illuminated by the visible laser beam for each scan line.

14. A system for generating a visible image with a laser beam by deflecting a visible laser beam into a zone from a wearable device (1318, 2109), the wearable device comprising the system as claimed in any preceding claim;
wherein the projection area comprises the visible image.

15. A projection system comprising at least one projector module, the projector module comprising:
a laser light source generating a laser light beam; and
the system as claimed in any preceding claim.

## Patentansprüche

1. System (100; 200; 300; 400; 500; 600; 700; 800; 900; 1000; 1100; 1200; 2100; 2200; 2905) zum Ablenken eines Laserstrahls (104; 204; 304; 404; 504; 604; 704; 804; 904; 1004; 1104; 1204, 1220; 1304; 1620; 2104; 2204; 2903) in eine Zone, umfassend:
eine erste Betätigungsvorrichtung (101; 201; 301; 401; 501; 601; 701; 801; 901; 1001; 1101; 1201; 1601; 2101; 2802), umfassend eine erste reflektierende, bewegliche Oberfläche, angeordnet, um sich um zwei oder mehr Achsen zu neigen, um den Laserstrahl abzulenken, um einen Projektionsbereich um einen Projektionsmittelpunkt herum zu definieren;
eine zweite Betätigungsvorrichtung (102; 202; 302; 402; 502; 602; 702; 802; 902; 1002; 1102; 1202; 1602; 2102; 2800; 2900; 3000), angeordnet, um den Laserstrahl zu neigen und zu richten, um einen Standort des Projektionsmittelpunkts in der Zone zu bestimmen;
wobei die erste Betätigungsvorrichtung in der Lage ist, sich schneller als die zweite Betätigungsvorrichtung zu bewegen; **dadurch gekennzeichnet, dass**
die erste reflektierende bewegliche Oberfläche eine verformbare bewegliche Oberfläche ist, die bei Betätigung ihre Gestalt ändern kann.

2. System nach Anspruch 1, wobei die zweite Betätigungsvorrichtung eine zweite reflektierende bewegliche Oberfläche umfasst.

3. System (100; 200; 300; 400; 500; 600; 700; 800; 900; 1000; 1100; 1200; 2100; 2200; 2905) zum Ablenken eines Laserstrahls (104; 204; 304; 404; 504; 604; 704; 804; 904; 1004; 1104; 1204, 1220; 1304; 1620; 2104; 2204; 2903) in eine Zone, umfassend:
eine erste Betätigungsvorrichtung (101; 201; 301; 401; 501; 601; 701; 801; 901; 1001; 1101; 1201; 1601; 2101; 2802), umfassend eine erste reflektierende, bewegliche Oberfläche, angeordnet, um sich um zwei oder mehr Achsen zu neigen, um den Laserstrahl abzulenken, um einen Projektionsbereich um einen Projektionsmittelpunkt herum zu definieren;
eine zweite Betätigungsvorrichtung (102; 202; 302; 402; 502; 602; 702; 802; 902; 1002; 1102; 1202; 1602; 2102; 2800; 2900; 3000), angeordnet, um den Laserstrahl zu neigen und zu richten, um einen Standort des Projektionsmittelpunkts in der Zone zu bestimmen;
wobei die erste Betätigungsvorrichtung in der Lage ist, sich schneller zu bewegen als die zweite Betätigungsvorrichtung;
wobei die zweite Betätigungsvorrichtung eine zweite reflektierende, bewegliche Oberfläche umfasst;
**dadurch gekennzeichnet, dass** die zweite reflektierende, bewegliche Oberfläche eine verformbare, bewegliche Oberfläche ist, die bei Betätigung ihre Gestalt ändern kann.

4. System nach einem der Ansprüche 1 bis 3, wobei die erste Betätigungsvorrichtung angeordnet ist, um einen einfallenden Laserstrahl auf die zweite Betätigungsvorrichtung zu richten.

5. System nach einem der Ansprüche 1 bis 4, wobei die erste Betätigungsvorrichtung an der zweiten Betätigungsvorrichtung so montiert ist, dass eine Bewegung der zweiten Betätigungsvorrichtung eine Bewegung der ersten Betätigungsvorrichtung unabhängig von der Bewegung der ersten reflektierenden, beweglichen Oberfläche veranlasst.

6. System nach einem vorstehenden Anspruch, wobei die erste Betätigungsvorrichtung angeordnet ist, um in einem Resonanzmodus zu arbeiten, wobei der Resonanzmodus das Oszillieren der ersten reflektierenden, beweglichen Oberfläche um die eine oder die mehreren Achsen umfasst.

7. System nach einem vorstehenden Anspruch, wobei die zweite Betätigungsvorrichtung angeordnet ist, um sich um zwei oder mehr Achsen zu neigen, und um mindestens eine der Achsen einen größeren Bewegungsbereich aufzuweisen als die erste Betätigungsvorrichtung.

8. System nach einem von Anspruch 3, wobei die erste reflektierende, bewegliche Oberfläche ein verformbares, bewegliches Element ist, das bei Betätigung seine Gestalt ändern kann.

9. System nach einem vorstehenden Anspruch, wobei die zweite Betätigungsvorrichtung Folgendes umfasst:
mindestens einen Aktuatorarm (16), der eine piezoelektrische Membran umfasst und eine Breite von mindestens dem Zehnfachen seiner Dicke aufweist; und
ein bewegliches Element (4), das mit dem Aktuatorarm verbunden ist, sodass die Betätigung des Aktuatorarms eine Bewegung des beweglichen Elements veranlasst.

10. Projektionssystem, umfassend:
eine sichtbare Laserquelle zum Erzeugen eines sichtbaren Laserstrahls und
ein System zum Ablenken des Laserstrahls in eine Zone nach einem vorstehenden Anspruch;
wobei das Projektionssystem angeordnet ist, um ein sichtbares Bild in der Zone unter Verwendung des Laserstrahls zu erzeugen.

11. System nach einem vorstehenden Anspruch, wobei das System einen optischen Sensor (617, 1017, 1617, 2108) umfasst, der angeordnet ist, um Bilddaten von mindestens einem Teil des Projektionsbereichs zu erfassen, wobei der optische Sensor optional auf einen Strahlengang des Laserstrahls ausgerichtet ist, wobei der optische Sensor weiter optional weniger als 1000 Pixel umfasst.

12. System nach Anspruch 11, wobei die zweite Betätigungsvorrichtung eine oder die zweite reflektierende, bewegliche Oberfläche umfasst, die angeordnet ist, um Licht aus dem Projektionsbereich zum optischen Sensor abzulenken, sodass der optische Sensor mindestens einen Teil des Projektionsbereichs abbilden kann.

13. System nach einem vorstehenden Anspruch, wobei das System angeordnet ist, um das sichtbare Bild durch Abtasten des sichtbaren Laserstrahls zu erzeugen; wobei das Abtasten Folgendes umfasst:
Bewegen der ersten reflektierenden, beweglichen Oberfläche, um eine Abtastung durchzuführen;
wobei die Abtastung einem Abtastweg folgt, umfassend eine oder mehrere Abtastzeilen, wobei jede Abtastzeile eine Vielzahl von Punkten umfasst, wobei jeder Punkt ein Pixel des sichtbaren Bildes repräsentiert; und
wobei die sichtbare Laserquelle ausgebildet ist, um für jede Abtastzeile zu bestimmen, welches der Vielzahl von Pixeln durch den sichtbaren Laserstrahl beleuchtet wird.

14. System zum Erzeugen eines sichtbaren Bildes mit einem Laserstrahl durch Ablenken eines sichtbaren Laserstrahls in eine Zone von einer tragbaren Vorrichtung (1318, 2109), wobei die tragbare Vorrichtung das System nach einem vorstehenden Anspruch umfasst;
wobei der Projektionsbereich das sichtbare Bild umfasst.

15. Projektionssystem, umfassend mindestens ein Projektormodul, wobei das Projektormodul Folgendes umfasst:
eine Laserlichtquelle, die einen Laserlichtstrahl erzeugt; und
das System nach einem vorstehenden Anspruch.

## Revendications

1. Système (100 ; 200 ; 300 ; 400 ; 500 ; 600 ; 700 ; 800 ; 900 ; 1000 ; 1100 ; 1200 ; 2100 ; 2200 ; 2905) pour dévier un faisceau laser (104 ; 204 ; 304 ; 404 ; 504 ; 604 ; 704 ; 804 ; 904 ; 1004 ; 1104 ; 1204, 1220 ; 1304 ; 1620 ; 2104 ; 2204 ; 2903) dans une zone, comprenant :
un premier dispositif d'actionnement (101 ; 201 ; 301 ; 401 ; 501 ; 601 ; 701 ; 801 ; 901 ; 1001 ; 1101 ; 1201 ; 1601 ; 2101 ; 2802) comprenant une première surface mobile réfléchissante agencée pour s'incliner autour de deux axes ou plus de manière à dévier le faisceau laser pour définir une zone de projection autour d'un centre de projection ;
un deuxième dispositif d'actionnement (102 ; 202 ; 302 ; 402 ; 502 ; 602 ; 702 ; 802 ; 902 ; 1002 ; 1102 ; 1202 ; 1602 ; 2102 ; 2800 ; 2900 ; 3000) agencé pour incliner et diriger le faisceau laser de manière à déterminer un emplacement du centre de projection dans la zone ;
dans lequel le premier dispositif d'actionnement peut se déplacer plus rapidement que le deuxième dispositif d'actionnement ; **caractérisé en ce que**
la première surface mobile réfléchissante est une surface mobile déformable qui peut changer de forme lors de l'actionnement.

2. Système selon la revendication 1, dans lequel le deuxième dispositif d'actionnement comprend une deuxième surface mobile réfléchissante.

3. Système (100 ; 200 ; 300 ; 400 ; 500 ; 600 ; 700 ; 800 ; 900 ; 1000 ; 1100 ; 1200 ; 2100 ; 2200 ; 2905) pour dévier un faisceau laser (104 ; 204 ; 304 ; 404 ; 504 ; 604 ; 704 ; 804 ; 904 ; 1004 ; 1104 ; 1204, 1220 ; 1304 ; 1620 ; 2104 ; 2204 ; 2903) dans une zone, comprenant :
un premier dispositif d'actionnement (101 ; 201 ; 301 ; 401 ; 501 ; 601 ; 701 ; 801 ; 901 ; 1001 ; 1101 ; 1201 ; 1601 ; 2101 ; 2802) comprenant une première surface mobile réfléchissante agencée pour s'incliner autour de deux axes ou plus de manière à dévier le faisceau laser pour définir une zone de projection autour d'un centre de projection ;
un deuxième dispositif d'actionnement (102 ; 202 ; 302 ; 402 ; 502 ; 602 ; 702 ; 802 ; 902 ; 1002 ; 1102 ; 1202 ; 1602 ; 2102 ; 2800 ; 2900 ; 3000) agencé pour incliner et diriger le faisceau laser de manière à déterminer un emplacement du centre de projection dans la zone ;
dans lequel le premier dispositif d'actionnement peut se déplacer plus rapidement que le deuxième dispositif d'actionnement ;
dans lequel le deuxième dispositif d'actionnement comprend une deuxième surface mobile réfléchissante ;
**caractérisé en ce que** la deuxième surface mobile réfléchissante est une surface mobile déformable qui peut changer de forme lors de l'actionnement.

4. Système selon l'une quelconque des revendications 1 à 3, dans lequel le premier dispositif d'actionnement est agencé pour diriger un faisceau laser incident vers le deuxième dispositif d'actionnement.

5. Système selon l'une quelconque des revendications 1 à 4, dans lequel le premier dispositif d'actionnement est monté sur le deuxième dispositif d'actionnement de sorte que le mouvement du deuxième dispositif d'actionnement provoque le mouvement du premier dispositif d'actionnement indépendamment du mouvement de la première surface mobile réfléchissante.

6. Système selon une quelconque revendication précédente, dans lequel le premier dispositif d'actionnement est agencé pour fonctionner dans un mode résonant, le mode résonant comprenant l'oscillation de la première surface mobile réfléchissante autour desdits un ou plusieurs axes.

7. Système selon une quelconque revendication précédente, dans lequel le deuxième dispositif d'actionnement est agencé pour s'incliner sur environ deux axes ou plus et présenter une plus grande plage de mouvement, sur au moins l'un desdits axes, que le premier dispositif d'actionnement.

8. Système selon une quelconque de la revendication 3, dans lequel la première surface mobile réfléchissante est un élément mobile déformable qui peut changer de forme lors de l'actionnement.

9. Système selon une quelconque revendication précédente, dans lequel le deuxième dispositif d'actionnement comprend :
au moins un bras actionneur (16) comprenant une membrane piézoélectrique et présentant une largeur d'au moins dix fois son épaisseur ; et
un élément mobile (4), relié au bras actionneur, de sorte que l'actionnement du bras actionneur provoque un mouvement de l'élément mobile.

10. Système de projection comprenant :
une source laser visible pour générer un faisceau laser visible et
un système de déviation du faisceau laser dans une zone selon une quelconque revendication précédente ;
dans lequel le système de projection est agencé pour générer une image visible dans la zone en utilisant le faisceau laser visible.

11. Système selon une quelconque revendication précédente, dans lequel le système comprend un capteur optique (617, 1017, 1617, 2108) agencé pour capturer des données d'image d'au moins une partie de la zone de projection, facultativement dans lequel le capteur optique est aligné avec un chemin optique du faisceau laser, en outre facultativement dans lequel le capteur optique comprend moins de 1 000 pixels.

12. Système selon la revendication 11, dans lequel le deuxième dispositif d'actionnement comprend une ou la deuxième surface mobile réfléchissante agencée pour dévier la lumière de la zone de projection vers le capteur optique de sorte que le capteur optique puisse imager au moins une partie de la zone de projection.

13. Système selon une quelconque revendication précédente, dans lequel le système est agencé pour générer l'image visible par balayage dudit faisceau laser visible ; le balayage comprenant :
le déplacement de la première surface mobile réfléchissante pour la mise en œuvre d'un balayage ;
dans lequel ledit balayage suit un chemin de balayage comprenant une ou plusieurs lignes de balayage, chaque ligne de balayage comprenant une pluralité de points, chaque point représentant un pixel de l'image visible ; et
dans lequel la source laser visible est configurée pour déterminer lequel de la pluralité de pixels est éclairé par le faisceau laser visible pour chaque ligne de balayage.

14. Système de génération d'une image visible avec un faisceau laser par déviation d'un faisceau laser visible dans une zone à partir d'un dispositif portable (1318, 2109), le dispositif portable comprenant le système selon une quelconque revendication précédente ;
dans lequel la zone de projection comprend l'image visible.

15. Système de projection comprenant au moins un module projecteur, le module projecteur comprenant :
une source de lumière laser générant un faisceau de lumière laser ; et
le système selon une quelconque revendication précédente.
